# EUROPEAN PATENT APPLICATION

(11) **EP 3 608 905 A1**
(43) Date of publication of application: **12.02.2020**
(21) Application number: 19190307.9
(22) Date of filing: 06.08.2019
(51) Int. Cl.: G10L 15/22

(54) **ELECTRONIC APPARATUS FOR PROCESSING USER UTTERANCE AND CONTROLLING METHOD THEREOF**

(30) Priority: 08.08.2018 KR 20180092701
(71) Applicant: Samsung Electronics Co., Ltd., Gyeonggi-do 16677 (KR)
(72) Inventor: Jaygarl, Hojun, Gyeonggi-do, Suwon-si 16677 (KR); Kim, Jinwoong, Gyeonggi-do, Suwon-si 16677 (KR); Choe, Sungyul, Gyeonggi-do, Suwon-si 16677 (KR); Lee, Kwangbin, Gyeonggi-do, Suwon-si 16677 (KR); Cho, Yunhi, Gyeonggi-do, Suwon-si 16677 (KR); Kim, Jihyun, Gyeonggi-do, Suwon-si 16677 (KR)
(74) Representative: Nederlandsch Octrooibureau

(57) **Abstract**

An electronic apparatus includes a communication interface, a memory, a microphone, a speaker, a touch screen display, and at least one processor. The electronic apparatus transmits voice input and identification information matched with the compatible information, to an external server in response to receiving a voice input for performing a task, to obtain state information of an executing application. The electronic apparatus stores the incompatible information matched with the identification information in the memory, receives action information, which is generated based on the voice input and the compatible information, and the compatible information from the external server, to obtain the incompatible information stored in the memory, using the identification information matched with the compatible information. The electronic apparatus performs the task based on the action information, and uses the obtained incompatible information when performing the task. The obtained state information includes compatible information, incompatible information, and identification information (ID).

## Description

### CROSS-REFERENCE TO RELATED APPLICATION

This application is based on and claims priority under 35 U.S.C. § 119 to Korean Patent Application No. 10-2018-0092701, filed on August 8, 2018, in the Korean Intellectual Property Office, the disclosure of which is incorporated by reference herein its entirety.

### BACKGROUND

### 1. Field

The disclosure relates to a technology for processing a user utterance.

### 2. Description of Related Art

In addition to a conventional input scheme using a keyboard or a mouse, electronic apparatuses have recently supported various input schemes such as a voice input and the like. For example, the electronic apparatuses such as a smartphone or a tablet PC may recognize the voice of a user input in a state where a speech recognition service is executed and may execute an action corresponding to a voice input or may provide the result found depending on the voice input.

Nowadays, the speech recognition service is being developed based on a technology processing a natural language. The technology processing the natural language refers to a technology that grasps the intent of the user utterance and provides the user with the result suitable for the intent.

The above information is presented as background information only to assist with an understanding of the disclosure. No determination has been made, and no assertion is made, as to whether any of the above might be applicable as prior art with regard to the disclosure.

### SUMMARY

According to embodiments disclosed in the disclosure, when receiving a voice input for performing an action requiring state information of an executed app, a user terminal may transmit state information including not only compatible information capable of being processed in another device but also incompatible information not capable of being processed in another device, to an intelligent server. The intelligent server may process only the compatible information included in the received state information and may fail to process incompatible information. In other words, information for processing incompatible information may not be stored in a capsule database storing information for processing the voice input of the intelligent server. As such, in a procedure in which the intelligent server processes the voice input, the incompatible information may be lost. Furthermore, the user terminal may waste finite communication resources (e.g., bandwidth) by transmitting unnecessary information not capable of being processed, to the intelligent server.

A user terminal according to various embodiments of the disclosure may transmit and process only the compatible information to an intelligent server, thereby increasing the efficiency of the processing and the reliability of the result.

Aspects of the disclosure are to address at least the above-mentioned problems and/or disadvantages and to provide at least the advantages described below.

In accordance with an aspect of the disclosure, an electronic apparatus may include a communication interface, a memory, a microphone, a speaker, a touch screen display, and at least one processor. The memory may store instructions that, when executed, cause the at least one processor to transmit the voice input and the identification information matched with the compatible information, to an external server via the communication interface when receiving a voice input for performing a task via the microphone, to obtain state information of a running application, to store the incompatible information matched with the identification information in the memory, to transmit action information, which is generated based on the voice input and the compatible information, and the compatible information from the external server via the communication interface, to obtain the incompatible information stored in the memory, using the identification information matched with the compatible information, to perform the task based on the action information, and to use the obtained incompatible information when performing the task. The obtained state information may include compatible information capable of being processed by another apparatus different from the electronic apparatus, incompatible information not capable of being processed by the other apparatus, and identification information (ID) and the compatible information and the incompatible information may be pieces of information necessary to perform the task.

In accordance with another aspect of the disclosure, a server for processing a user utterance may include a communication interface, a memory including a database storing information of a plurality of applications executed by an external electronic apparatus, at least one processor. The memory may store instructions that, when executed, cause the at least one processor to receive a voice input for performing a task and compatible information included in state information of an application executed by the external electronic apparatus, from the external electronic apparatus via the communication interface, to generate action information for performing the task based on the voice input and the compatible information, and to transmit the generated action information and the compatible information matched with the identification information, to the external electronic apparatus via the communication interface. The compatible information may be matched with identification information (ID), and the state information may include the compatible information and incompatible information.

In accordance with another aspect of the disclosure, a system for processing a user utterance may include an electronic apparatus including a first communication interface, a first memory, a microphone, a speaker, a touch screen display, and a first processor, and a server including a second communication interface, a second memory including a database storing information of a plurality of applications executed by the electronic apparatus, and a second processor. The first memory may store first instructions that, when executed, cause the first processor to obtain state information of a running application when receiving a voice input for performing a task via the microphone, to transmit the user utterance and the identification information matched with the compatible information, to the server via the first communication interface, and to store the incompatible information matched with the identification information in the first memory. The second memory may store second instructions that, when executed, cause the second processor to receive the voice input and the compatible information matched with the identification information from the other apparatus via the second communication interface, to generate action information for performing the task based on the voice input and the compatible information, and to transmit the generated action information and the compatible information matched with the identification information, to the other apparatus via the second communication interface, and the first instructions may, when executed, cause the first processor to receive the action information from the server via the first communication interface, to obtain the incompatible information stored in the first memory, using the identification information matched with the compatible information, and to perform the task based on the action information, and to use the obtained incompatible information when performing the task. The obtained state information may include compatible information capable of being processed by another apparatus different from the electronic apparatus, incompatible information not capable of being processed by the other apparatus, and identification information (ID) and the compatible information and the incompatible information may be pieces of information necessary to perform the task.

In accordance with another aspect of the disclosure, an electronic apparatus may include a touch screen display, at least one communication circuit, a microphone, a speaker, at least one processor operatively connected to the display, the communication circuit, the microphone, and the speaker, a volatile memory operatively connected to the processor, and at least one nonvolatile memory electrically connected to the processor. The nonvolatile memory may be configured to store a first application program including a graphic user interface, to store at least part of a voice-based intelligent assistance service program, and to store instructions. The instructions may, when executed, cause the processor to execute the first application program to display the user interface on the display, to receive first data by a first input of a user via the user interface to store the first data in the volatile memory, to receive a second input of the user for requesting the assistance service program to perform a task associated with the first application program, via the microphone, to transmit the second input to an external server by using the communication circuit, to receive second data for responding to the second input, from the external server by using the communication circuit, and to update the user interface based at least partly on the first data and the second data.

Other aspects, advantages, and salient features of the disclosure will become apparent to those skilled in the art from the following detailed description, which, taken in conjunction with the annexed drawings, discloses various embodiments of the disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features, and advantages of certain embodiments of the disclosure will be more apparent from the following description taken in conjunction with the accompanying drawings, in which:
FIG. 1 illustrates a view of an integrated intelligent system, according to various embodiments;
FIG. 2 illustrates a block diagram of a configuration of a user terminal, according to various embodiments;
FIGS. 3A and 3B illustrate views of screens in each of which a user terminal processes a voice input received via an intelligent app, according to various embodiments;
FIG. 4 illustrates a block diagram of a configuration of an intelligent server, according to various embodiments;
FIG. 5 illustrates a view of a form in which information is stored in a capsule DB of an intelligent server, according to various embodiments;
FIG. 6 illustrates a view of a plan generated by a natural language platform of an intelligent server, according to various embodiments;
FIGS. 7 and 8 illustrate views of a plan generated by an intelligent server, according to an embodiment;
FIG. 9 illustrates a sequence diagram of a procedure of processing a voice input in a user terminal, according to various embodiments;
FIG. 10 illustrates a sequence diagram of a procedure of generating a result corresponding to a voice input in an intelligent server, according to an embodiment;
FIG. 11 illustrates a sequence diagram of a procedure of generating a result corresponding to a voice input in a user terminal, according to an embodiment;
FIG. 12 illustrates a sequence diagram of a procedure of generating a result corresponding to a voice input in a user terminal, according to an embodiment;
FIG. 13 illustrates a view of a procedure in which a user terminal transmits and processes state information together with a voice input to an intelligent server, according to an embodiment;
FIG. 14 illustrates a view of a state in which a user terminal executes an app, according to an embodiment;
FIG. 15 illustrates a view that a user terminal displays a screen including compatible information and incompatible information in a display, according to an embodiment;
FIG. 16 illustrates a view of a procedure in which a user terminal transmits state information of an executed app to an intelligent server, according to an embodiment;
FIG. 17 illustrates a view of a procedure in which an intelligent server receives missing information to form a plan corresponding to a voice input, according to an embodiment;
FIG. 18 illustrates a view that a user terminal outputs missing information via a display, according to an embodiment;
FIG. 19 illustrates a view that an intelligent server transmits a plan in which missing information is included, to a user terminal, according to an embodiment;
FIG. 20 illustrates a view of a procedure in which a user terminal performs an action based on a plan to which incompatible information is added, according to an embodiment;
FIG. 21 illustrates a view of a screen, in which a user terminal performs an action based on a plan, displayed in a display according to an embodiment;
FIG. 22 illustrates a view of a procedure in which a user terminal performs an action based on a plan to which incompatible information is added, according to another embodiment; and
FIG. 23 illustrates a block diagram of an electronic device in a network environment according to various embodiments.

### DETAILED DESCRIPTION

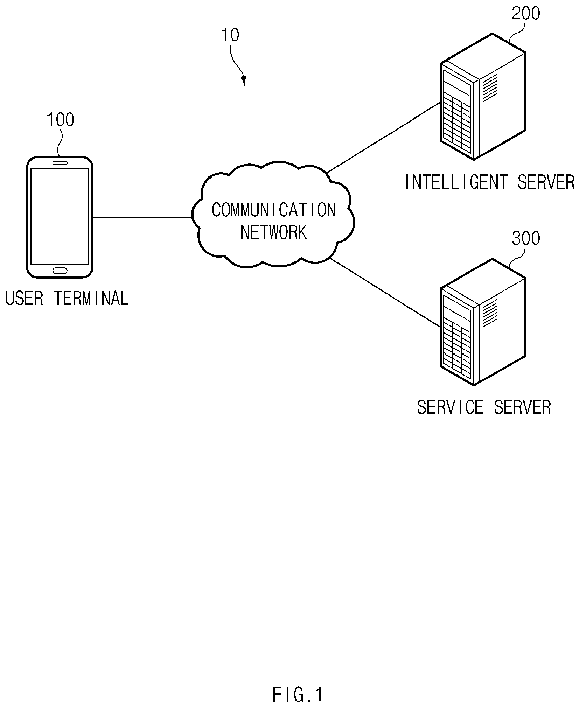

FIGS. 1 through 23, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, various embodiments of the disclosure will be described with reference to accompanying drawings. However, those of ordinary skill in the art will recognize that modification, equivalent, and/or alternative on various embodiments described herein can be variously made without departing from the scope and spirit of the disclosure.

FIG. 1 illustrates a view of an integrated intelligent system, according to various embodiments.

Referring to FIG. 1, an integrated intelligent system 10 may include a user terminal 100, an intelligent server 200, and a service server 300.

The user terminal 100 may provide a user with a specified service via an app (or an application program) (e.g., an alarm app, a message app, a schedule app, or the like) stored therein. According to an embodiment, the user terminal 100 may provide a speech recognition service via an intelligent app (or a speech recognition app) stored therein. For example, the user terminal 100 may recognize a voice input received via the intelligent app and may provide the user with a service corresponding to the recognized voice input. According to an embodiment, various types of terminal devices (or an electronic device), which are connected with Internet, such as a mobile phone, a smartphone, personal digital assistant (PDA), a notebook computer, and the like may correspond to the user terminal 100.

According to an embodiment, the user terminal 100 may receive the user input. The user input may include, for example, an input received via a physical button, a touch input, a voice input, or the like. According to an embodiment, the user terminal 100 may receive a voice input by a user utterance. The user terminal 100 may perform the specified action based on the received voice input. For example, the user terminal 100 may execute an app corresponding to the received voice input and may perform the specified action via the executed app.

According to an embodiment, the intelligent server 200 may receive a voice input from the user terminal 100 over a communication network. According to an embodiment, the intelligent server 200 may change the received voice input into text data. According to an embodiment, the intelligent server 200 may generate a plan to perform a specified task based on the text data. For example, the plan may include a plurality of actions arranged stepwise (or hierarchically) to perform a task corresponding to a user's intent. The plurality of concepts may define the formats of an input value (e.g., a parameter) and a result value, which are associated with the plurality of actions.

According to an embodiment, the plan may be generated by an artificial intelligent (AI) system. The AI system may be a rule-based system, or may be a neural network-based system (e.g., a feedforward neural network (FNN) or a recurrent neural network (RNN)). Alternatively, the AI system may be a combination of the above-described systems or an AI system different from the above-described system. According to an embodiment, the plan may be selected from a set of predefined plans or may be generated in real time in response to a user request. For example, the AI system may select at least a plan of predefined plurality of plans or may generate a plan dynamically (or in real time). Furthermore, the user terminal 100 may use a hybrid system to provide a plan.

According to an embodiment, the intelligent server 200 may transmit the result according to the generated plan to the user terminal 100 or may transmit the generated plan to the user terminal 100. According to an embodiment, the user terminal 100 may display the result according to the plan, on a display. According to an embodiment, the user terminal 100 may display the result of executing the action according to the plan, on the display.

According to an embodiment, the service server 300 may provide the user terminal 100 with a specified service (e.g., food order, hotel reservation, or the like). According to an embodiment, the service server 300 may be a server operated by the third party. The third party may be a person other than a manufacturing company of the user terminal 100 or a person operating the intelligent server 200. According to an embodiment, the service server 300 may provide the intelligent server 200 with information about the specified service. According to an embodiment, the intelligent server 200 may determine an action for performing a task corresponding to a voice input, based on the provided information. According to an embodiment, the service server 300 may provide the intelligent server 200 with information about the result of performing the determined action. The intelligent server 200 may transmit the result information to the user terminal 100.

As such, the integrated intelligent system 10 may deviate from the level of processing an input via a physical button, a touch panel, or the like or a voice input for performing a simple action (e.g., the activation of an electronic apparatus, the execution of a program) by grasping the intent of a user utterance through the intelligent server 200 to determine the action, and thus may provide a user with a new type of input interface capable of processing a user utterance requiring a plurality of actions that are organically associated with each other.

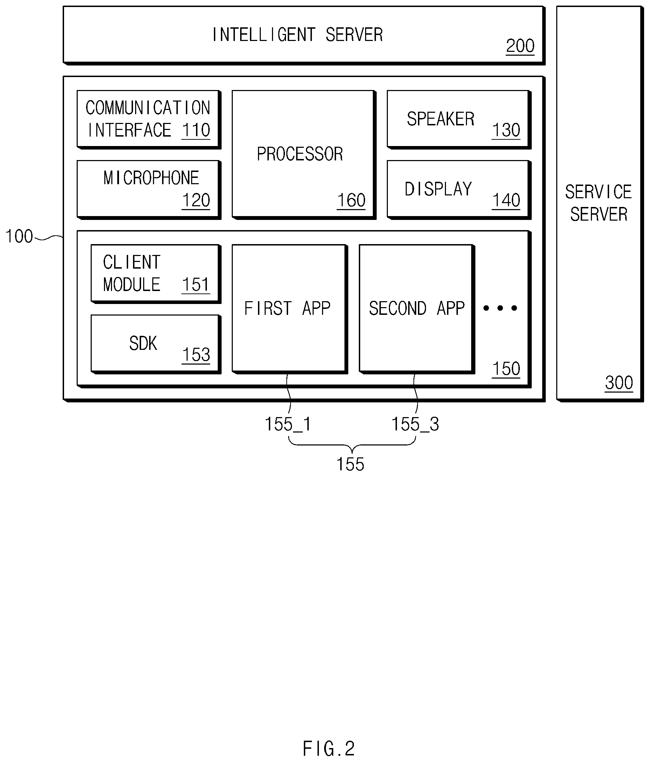

FIG. 2 illustrates a block diagram of a configuration of a user terminal, according to various embodiments.

Referring to FIG. 2, the user terminal 100 may include a communication interface 110, a microphone 120, a speaker 130, a display 140, a memory 150, and a processor 160.

According to an embodiment, the communication interface 110 may be connected to an external apparatus to transmit or receive data. For example, the communication interface 110 may transmit the received voice input to the intelligent server 200. Furthermore, the communication interface 110 may receive a response corresponding to the voice input. For example, the response may include a plan for performing a task corresponding to a voice input or a result of performing the task.

According to an embodiment, the microphone 120 may receive a voice input by a user utterance. For example, the microphone 120 may detect the user utterance and may generate a signal (or a voice signal) corresponding to the detected user utterance.

According to an embodiment, the speaker 130 may output the voice signal. For example, the speaker 130 may output the voice signal generated in the user terminal 100 to the outside.

According to an embodiment, the display 140 may display an image (or a video image). For example, the display 140 may display the graphic user interface (GUI) of the executed app.

According to an embodiment, the memory 150 may store a client module 151 and a software development kit (SDK) 153. The client module 151 and the SDK 153 may be a framework (or a solution program) for performing general-purposed functions. For example, the client module 151 and the SDK 153 may be a framework for processing a voice input. According to an embodiment, the client module 151 and the SDK 153 may be executed by the processor 160, and the function thereof may be implemented. The functions of the client module 151 and the SDK 153 will be described in the operation of the processor 160. According to an embodiment, the client module 151 and the SDK 153 may be implemented with not only software but also hardware.

According to an embodiment, the memory 150 may store a plurality of apps (or application programs) 155. The plurality of apps 155 may be a program for performing the specified function. According to an embodiment, the plurality of apps 155 may include a first app 155_1, a second app 155_3, or the like. According to an embodiment, each of the plurality of apps 155 may include a plurality of actions for performing the specified function. According to an embodiment, the plurality of apps 155 may be executed by the processor 160 to sequentially execute at least part of the plurality of actions. The processor 160 may control the actions of the plurality of apps 155 via the SDK 153.

According to an embodiment, the processor 160 may control overall operations of the user terminal 100. For example, the processor 160 may control the communication interface 110 to be connected to an external apparatus. The processor 160 may be connected to the microphone 120 to receive a voice input. The processor 160 may be connected to the speaker 130 to output a voice signal. The processor 160 may be connected to the display 140 to output an image. The processor 160 may execute the program stored in the memory 150 to perform the specified function.

According to an embodiment, the processor 160 may execute at least one of the client module 151 and the SDK 153 to perform the following action for processing a voice input. The following actions described as the actions of the client module 151 and the SDK 153 may be an action by the execution of the processor 160.

According to an embodiment, the client module 151 may receive a voice input. For example, the client module 151 may receive a voice signal corresponding to a user utterance detected via the microphone 120. According to an embodiment, the client module 151 may pre-process the received voice signal. According to an embodiment, to pre-process the user input, the client module 151 may include an adaptive echo canceller (AEC) module, a noise suppression (NS) module, an end-point detection (EPD) module, or an automatic gain control (AGC) module. The AEC may remove an echo included in the user input. The NS module may suppress a background noise included in the user input. The EPD module may detect an end-point of a user voice included in the user input and may search for a part in which the user voice is present, by using the detected end-point. The AGC module may recognize the user input and may adjust the volume of the user input so as to be suitable to process the recognized user input. According to an embodiment, all of the preprocessing components may be executed for performance, but a part of the preprocessing components may be executed to operate with low power.

According to an embodiment, the client module 151 may transmit the received voice input to the intelligent server 200. For example, the client module 151 may transmit first data corresponding to the received voice input to the intelligent server 200 via the communication interface 110. According to an embodiment, the client module 151 may transmit the state information of the user terminal 100 together with the received voice input, to the intelligent server 200. For example, the state information may be the execution state information of an app. According to an embodiment, the client module 151 may obtain the execution state information of an app via the SDK 153.

According to an embodiment, the client module 151 may receive text data corresponding to the transmitted voice input. According to an embodiment, the client module 151 may display the received text data in the display 140. The client module 151 may display the text data received in the streaming scheme, in the display 140. As such, the user may identify a voice input received by the user terminal 100.

According to an embodiment, the client module 151 may receive the result corresponding to the received voice input. For example, when the intelligent server 200 is capable of calculating the result corresponding to the received voice input (server end point), the client module 151 may receive the result corresponding to the received voice input. For example, the result may include information corresponding to the received voice input. Moreover, the result may additionally include information about a specified state of a specified app (e.g., the first app 155_1) for displaying the information. According to an embodiment, the client module 151 may display the received result in the display 140.

According to an embodiment, the client module 151 may receive a request for obtaining information necessary to calculate the result corresponding to a voice input, from the intelligent server 200. According to an embodiment, the client module 151 may transmit the necessary information to the intelligent server 200 in response to the request. As such, the client module 151 may receive the result calculated using the information, from the intelligent server 200.

According to an embodiment, the client module 151 may receive the plan corresponding to the received voice input. For example, when the client module 151 is not capable of obtaining the result corresponding to the received user input from the intelligent server 200 (client end point), the client module 151 may receive the plan corresponding to the received voice input. For example, the plan may include a plurality of actions for performing the task corresponding to the voice input and a plurality of concepts associated with the plurality of actions. The concept may define a parameter to be input for the execution of the plurality of actions or a result value output by the execution of the plurality of actions. Moreover, the plan may include the plurality of actions and information about the arrangement relation between the plurality of concepts. The plurality of actions and the plurality of concepts may be arranged stepwise (or sequentially) to perform the task corresponding to a voice input. According to an embodiment, the client module 151 may transmit the received plan to the SDK 153.

According to an embodiment, when receiving information necessary for the action from the intelligent server 200, the client module 151 may use a deep link. For example, the client module 151 may receive action information for obtaining the necessary information and the deep link including the plan corresponding to the voice input, from the intelligent server 200. The plan may include information about a plurality of actions for performing a task.

According to an embodiment, the SDK 153 may execute at least one app (e.g., the first app 155_1 and the second app 155_3) of the plurality of apps 155 depending on a plan and may execute the specified action of the executed at least one app. For example, the SDK 153 may bind at least one app to be executed depending on the plan and may transmit a command according to the plan to the bound app to execute the specified action. When the result value generated via the action of one app (e.g., the first app 155_1) is a parameter to be input (or necessary) to execute the action of another app (e.g., the second app 155_3), the SDK 153 may transmit the generated result value from the one app to another app.

According to an embodiment, the client module 151 may display the result of executing a plurality of actions of an app in the display 140 depending on the plan. For example, the client module 151 may sequentially display the execution result of a plurality of actions in a display. For another example, the user terminal 100 may display only a part of results (e.g., the result of the last action) of executing a plurality of actions, in the display. For another example, the user terminal 100 may receive the result of performing an action according to the plan from the intelligent server 200 and may display the received result in the display.

According to another embodiment, the SDK 153 may be included in each of the plurality of apps 155. In other words, each of the plurality of apps 155 may include the SDK 153. When each of the plurality of apps 155 includes the SDK 153, the client module 151 may execute an app depending on the plan and may transmit a request for executing the specified action via the SDK 153 included in each of the plurality of apps 155.

According to an embodiment, the client module 151 may transmit information about the result of executing a plurality of actions depending on the plan, to the intelligent server 200. The intelligent server 200 may determine that the received voice input is processed correctly, using the result information.

According to an embodiment, the client module 151 may receive a request for obtaining additional information from the intelligent server 200. The additional information may be information necessary to determine the plan corresponding to the received voice input. For example, additional information may include one of state information of the user terminal 100 or content information stored in the memory 150 of the user terminal 100. According to an embodiment, the client module 151 may obtain the execution state information of an app via the SDK 153. According to an embodiment, when information necessary to determine the plan is not included in the received voice input, the intelligent server 200 may transmit a request for obtaining the additional information to the user terminal 100.

According to an embodiment, the client module 151 may include a voice input module. According to an embodiment, the client module 151 may recognize a voice input to perform the limited function, via the voice input module. For example, the client module 151 may launch an intelligent app that processes a voice input for performing an organic action, via a specified input (e.g., wake up!). According to an embodiment, the voice input module may assist the intelligent server 200 to process the voice input. As such, it may be possible to quickly process the voice input capable of being processed in the user terminal 100.

According to an embodiment, the speech recognition module of the client module 151 may recognize a voice input, using a specified algorithm. For example, the specified algorithm may include at least one of a hidden Markov model (HMM) algorithm, an artificial neural network (ANN) algorithm, or a dynamic time warping (DTW) algorithm.

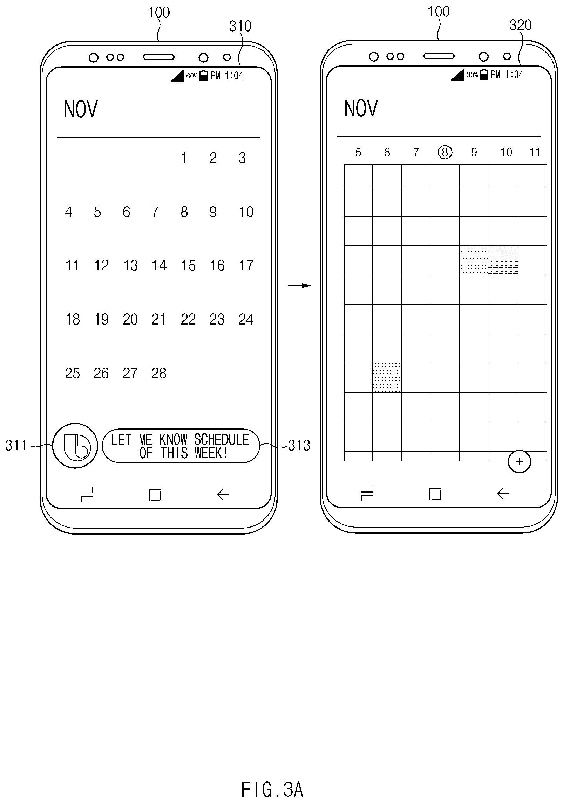

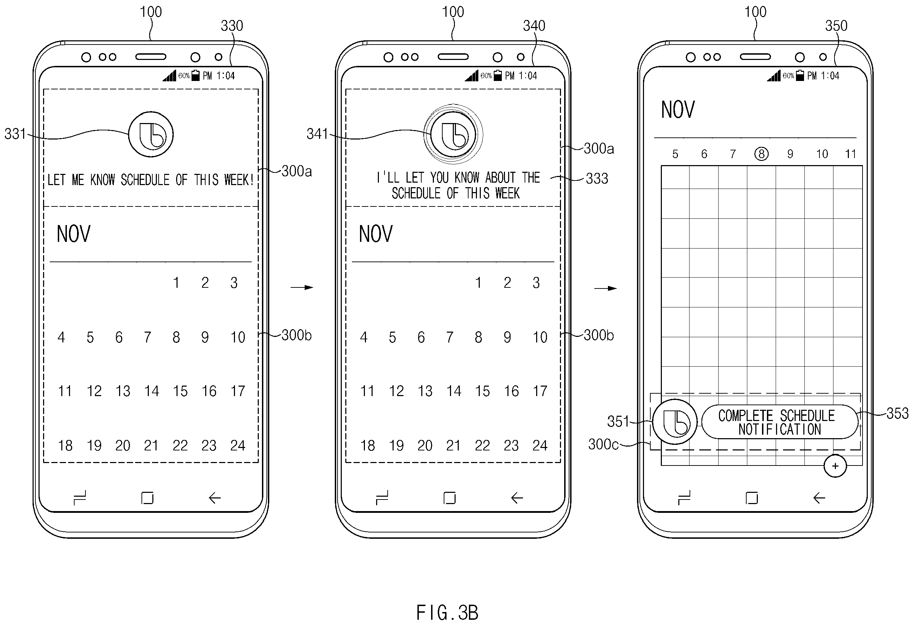

FIGS. 3A and 3B illustrate views of screens in each of which a user terminal processes a voice input received via an intelligent app, according to various embodiments.

Referring to FIG. 3A, the user terminal 100 may launch an intelligent app for processing a user input and then may receive the result corresponding to the user input from an intelligent server (e.g., the intelligent server 200 of FIG. 2).

According to an embodiment, in screen 310, when recognizing a specified voice input (e.g., wake up!) or receiving an input via a hardware key (e.g., the dedicated hardware key), the user terminal 100 may launch an intelligent app for processing a voice input. For example, the user terminal 100 may launch an intelligent app in a state in which a schedule app is executed. According to an embodiment, the user terminal 100 may display the UI of the intelligent app including an object (e.g., an icon 311) corresponding to the intelligent app, in a display (e.g., the display 140 of FIG. 2). According to an embodiment, the user terminal 100 may receive a voice input by a user utterance. For example, the user terminal 100 may receive a voice input saying that "Let me know the schedule of this week!". According to an embodiment, the user terminal 100 may display a user interface (UI) 312 (e.g., an input window) of an intelligent app, in which text data of the received voice input is displayed, in a display. For example, the user terminal 100 may display text data in the display, by receiving text data (e.g., Let me know the schedule of this week!) of a voice input from an intelligent server in the streaming scheme.

According to an embodiment, in screen 320, the user terminal 100 may display the result corresponding to the received voice input, in the display. For example, the user terminal 100 may receive the result corresponding to the received user input from the intelligent server and may display the received result (e.g., the schedule of this week) in the display.

Referring to FIG. 3B, the user terminal 100 may launch an intelligent app for processing a user input and then may receive the plan corresponding to the user input from an intelligent server.

According to an embodiment, in screen 330, when recognizing a specified voice input or when receiving an input via a hardware key, the user terminal 100 may launch an intelligent app, similarly to screen 310 of FIG. 3A. According to an embodiment, the user terminal 100 may display the UI of the intelligent app including a dialogue area 300a for having a dialogue with a user and a content area 300b for displaying content, in a display. For example, the dialogue area 300a may include an object 331 corresponding to the intelligent app. The content area 300b may include the content of the executed schedule app. According to an embodiment, the user terminal 100 may receive a voice input saying that "Let me know the schedule of this week!". According to an embodiment, the user terminal 100 may display text data 333 of the voice input in the dialogue area 300a.

According to an embodiment, in screen 340, the user terminal 100 may receive the plan corresponding to a voice input from the intelligent server. The user terminal 100 may perform an action for outputting 'the schedule of this week' depending on the received plan. According to an embodiment, the user terminal 100 may display an indicator 341 indicating a state of performing an action and guide information (e.g., I'll let you know about the schedule of this week) in the dialogue area 300a.

According to an embodiment, in screen 350, the user terminal 100 may display the result of performing an action, in the display. For example, the user terminal 100 may display 'schedule information' corresponding to a user input in the display. According to an embodiment, the user terminal 100 may display the UI of the intelligent app including an action area 300c for providing the executed action information, in the display. For example, the user terminal 100 may display the UI of the intelligent app including an object 351 corresponding to the intelligent app and an output window for displaying action information, in the action area 300c. For example, the UI of the intelligent app displayed in the action area 300c may be displayed together with the result corresponding to a user input. For another example, the UI of the intelligent app displayed in the action area 300c may be displayed to be distinguished from the result corresponding to a user input. In other words, the user terminal 100 may display the content area 300b and the action area 300c to be distinguished from each other.

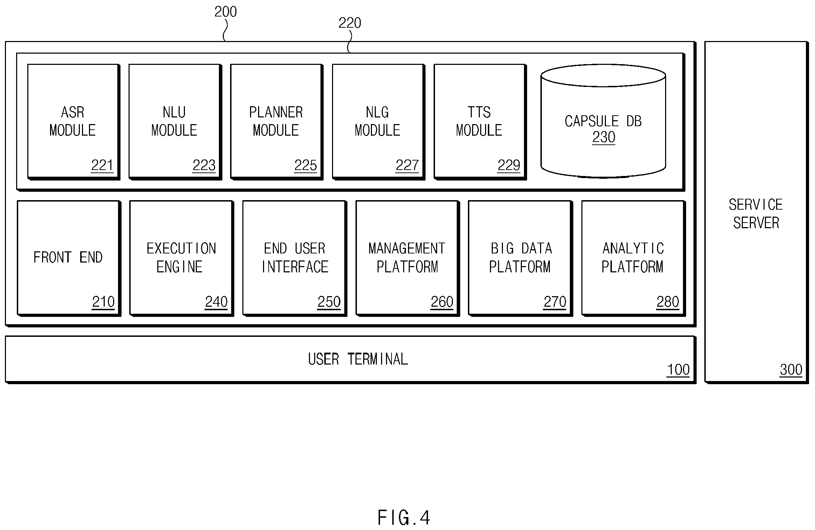

FIG. 4 illustrates a block diagram of a configuration of an intelligent server, according to various embodiments.

Referring to FIG. 4, the intelligent server 200 may include a front end 210, a natural language platform 220, a capsule DB 230, an execution engine 240, an end user interface 250, a management platform 260, a big data platform 270, and an analytic platform 280.

According to an embodiment, the front end 210 may be connected to an external apparatus to receive data. For example, the front end 210 may be connected to the user terminal 100 to receive a voice input. Furthermore, the front end 210 may transmit a response corresponding to the voice input. For example, the response may include a plan for performing a task corresponding to a voice input or a result of performing the task. According to an embodiment, when transmitting information necessary for an action to the user terminal 100, the front end 210 may use a deep link. For example, the front end 210 may transmit action information for obtaining specified information or the deep link including a plan corresponding to a voice input received from the user terminal 100, to the user terminal 100.

According to an embodiment, the natural language platform 220 may include an automatic speech recognition (ASR) module 221, a natural language understanding (NLU) module 223, a planner module 225, a natural language generator (NLG) module 227, and a text to speech module (TTS) module 229.

According to an embodiment, the ASR module 221 may convert the voice input received from the user terminal 100 to text data. For example, the ASR module 221 may include a speech recognition module. The speech recognition module may include an acoustic model and a language model. For example, the acoustic model may include information associated with phonation, and the language model may include unit phoneme information and information about a combination of unit phoneme information. The speech recognition module may convert a voice utterance into text data, using the information associated with phonation and unit phoneme information. For example, the information about the acoustic model and the language model may be stored in an ASR database (DB).

According to an embodiment, the NLU module 223 may grasp the intent of the user, using the text data of the voice input. For example, the NLU module 223 may grasp the intent of the user by performing syntactic analysis or semantic analysis. The syntactic analysis may divide the text data of a voice input into syntactic units (e.g., words, phrases, morphemes, and the like) and determine which syntactic elements the divided units have. The semantic analysis may be performed by using semantic matching, rule matching, formula matching, or the like. As such, the NLU module 223 may determine the intent of a voice input or a parameter necessary to express the intent.

According to an embodiment, the NLU module 223 may grasp the meaning of words extracted from the voice input by using linguistic features (e.g., syntactic elements) such as morphemes, phrases, or the like and may determine the intent of the user by matching the grasped meaning of the words with a rule. For example, the NLU module 223 may calculate how many words extracted from the voice input is included in the intent to determine the user intent. According to an embodiment, the NLU module 223 may determine a parameter of the voice input by using the words that are based for grasping the intent. According to an embodiment, the NLU module 223 may determine the user intent, using the NLU DB storing the linguistic features for grasping the intent of the voice input.

According to an embodiment, the planner module 225 may generate the plan by using the intent and a parameter, which are determined by the NLU module 223. According to an embodiment, the planner module 225 may determine a plurality of functions necessary to perform a task, based on the determined intent. The planner module 225 may determine a plurality of actions included in each of the determined plurality of functions, based on the intent. According to an embodiment, the planner module 225 may determine the parameter necessary to perform the determined plurality of actions or the result value output by the execution of the plurality of actions. The parameter and the result value may be defined as a concept of the specified form (or class). As such, the plan may include the plurality of actions and a plurality of concepts determined by the intent of the user.

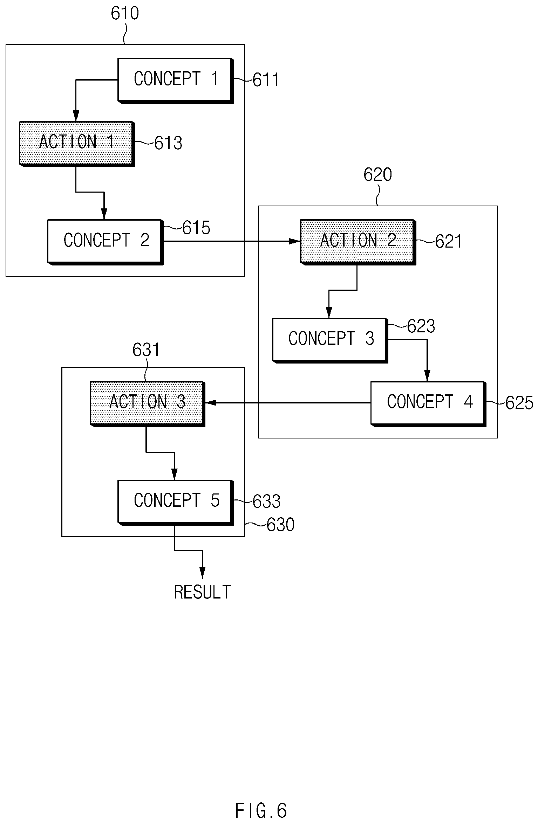

According to an embodiment, the planner module 225 may determine the relationship between the plurality of actions and the plurality of concepts stepwise (or hierarchically). For example, the planner module 225 may determine the execution sequence of the plurality of actions, which are determined based on a user's intent, based on the plurality of concepts. In other words, the planner module 225 may determine the execution sequence of the plurality of actions, based on the parameters necessary to perform the plurality of actions and the result output by the execution of the plurality of actions. As such, the planner module 225 may determine the relationship (e.g., ontology) between a plurality of actions and a plurality of concepts. According to an embodiment, the planner module 225 may generate not only a plurality of actions and a plurality of concepts but also a plan including relation information between a plurality of actions and a plurality of concepts. A method and a form in each of which the plan is generated will be described with reference to FIG. 6.

According to an embodiment, the planner module 225 may generate a plan, using information stored in the capsule DB 230. The method and the form in each of which the planner module 225 determines a plan will be described with reference to FIG. 6.

According to an embodiment, the NLG module 227 may change the specified information into information in the text form. Information changed to the text form may be a form of a natural language utterance. For example, the specified information may be information for guiding the completion of an action corresponding to a voice input, or information for guiding the additional input of a user (e.g., feedback information about a user input). The information changed to the text form may be displayed in a display (e.g., the display 140 of FIG. 2) after being transmitted to the user terminal 100 or may be changed to a voice form after being transmitted to the TTS module 229.

According to an embodiment, the TTS module 229 may change information of the text form to information of a voice form. The TTS module 229 may receive the information of the text form from the NLG module 227, may change the information of the text form to the information of a voice form, and may transmit the information of the voice form to the user terminal 100. The user terminal 100 may output the information of the voice form to the speaker 130

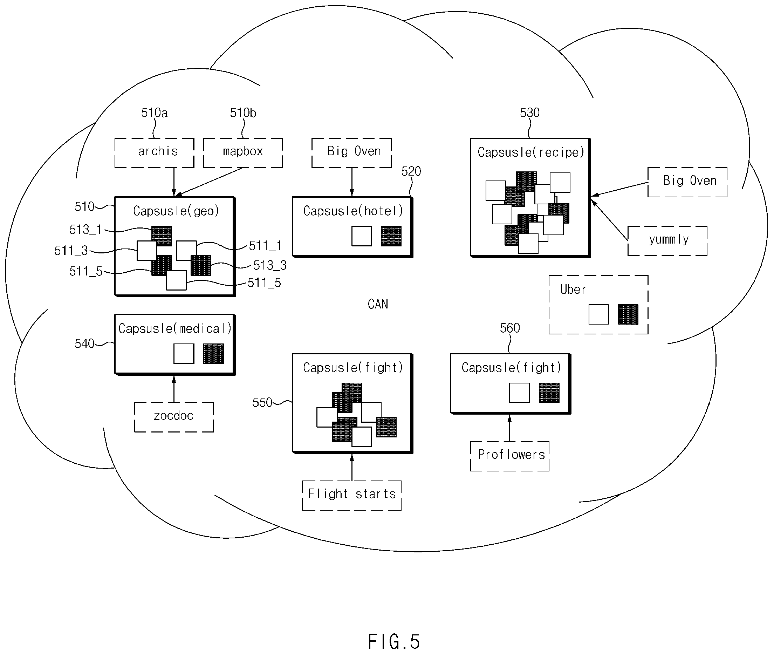

According to an embodiment, the capsule DB 230 may store a plurality of capsules (or capsule information) corresponding to the plurality of functions. For example, the plurality of capsules may include a plurality of action objects (or action information) and concept objects (or concept information) included in the plan. According to an embodiment, the capsule DB 230 may store the plurality of capsules in the form of a concept action network (CAN). The plurality of capsules stored in the form of CAN will be described with reference to FIG. 5. According to an embodiment, the plurality of capsules may be stored in the function registry included in the capsule DB 230.

According to an embodiment, the capsule DB 230 may include a strategy registry that stores strategy information necessary to determine a plan corresponding to a voice input. The strategy information may include reference information for determining a single plan when there is a plurality of plans corresponding to the voice input. According to an embodiment, the capsule DB 230 may include a follow up registry that stores the information of the follow-up action for suggesting a follow-up action to the user in the specified context. For example, the follow-up action may include a follow-up utterance. According to an embodiment, the capsule DB 230 may include a layout registry for storing layout information of the information output via the user terminal 100. According to an embodiment, the capsule DB 230 may include a vocabulary registry that stores vocabulary information included in the capsule information. According to an embodiment, the capsule DB 230 may include a dialog registry that stores information about dialog (or interaction) with the user.

According to an embodiment, the capsule DB 230 may update the stored object via a developer tool. For example, the developer tool may include a function editor for updating an action object and a concept object. The developer tool may include a vocabulary editor for updating the vocabulary. The developer tool may include a strategy editor that generates and registers a strategy for determining the plan. The developer tool may include a dialog editor that creates a dialog with the user. The developer tool may include a follow up editor capable of activating the follow-up target and editing the follow-up utterance for providing a hint. The follow-up target may be determined based on the currently set target, the preference of the user, environment condition, or the like.

According to an embodiment, some functions or entire functions of the natural language platform 220 may be implemented in the user terminal 100.

According to an embodiment, the execution engine 240 may output the result of executing a plurality of actions according to the generated plan. For example, the execution engine 240 may output the result of executing the action according to the plan via a service server (e.g., the service server 300 of FIG. 1). According to an embodiment, the end user interface 250 may determine a layout (e.g., UI) for providing the user terminal 100 with information. For example, the information may include result information, dialogue information, follow-up action information, or the like.

According to an embodiment, when executing an action according to the plan, the intelligent server 200 may include an execution session for storing the temporarily generated concept information. According to an embodiment, the intelligent server 200 may include a short-term end user memory that stores a plan in which the action is completed and a plan in which the action is interrupted.

According to an embodiment, the management platform 260 may manage information used by the intelligent server 200. For example, the management platform 260 may manage voice input information received from the user terminal 100 and response information transmitted to the user terminal 100.

According to an embodiment, the big data platform 270 may collect data of the user. For example, the user data may include context data (e.g., usage data, raw data for a user's decision, or the like), data registered in an account, and information obtained through analysis (e.g., preference, or the like). According to an embodiment, the big data platform 270 may store not only information of a single user but also information of a plurality of users.

According to an embodiment, the analytic platform 280 may manage the quality of service (QoS) of the intelligent server 200. For example, the analytic platform 280 may manage the component and processing speed (or efficiency) of the intelligent server 200. According to an embodiment, the analytic platform 280 may include a service scheduler that determines the execution order of a plurality of actions corresponding to a voice input based on the quality and cost of a service. Furthermore, the analytic platform 280 may store runtime information for providing a service via the service server 300. For example, the runtime information may include information such as call attempts, call successes, call failures, standby time, overhead for performing the specified action, or the like. According to an embodiment, the analytic platform 280 may include an analytics viewer generating a report that includes the performance of the configuration of the intelligent server 200, the distribution of apps requested by the user, and the speed at which the service via the service server 300 is provided, the success speed at which the service via the service server 300 is provided, or the like based on the runtime information.

FIG. 5 illustrates a view of a form in which information is stored in a capsule DB of an intelligent server, according to various embodiments.

Referring to FIG. 5, the capsule DB (e.g., the capsule DB 230 of FIG. 4) of an intelligent server (e.g., the intelligent server 200 of FIG. 4) may store a capsule in the form of CAN.

According to an embodiment, the capsule DB may store an action for processing a task corresponding to a voice input and a parameter necessary for the action, in the form of CAN.

According to an embodiment, the capsule DB may store a plurality of capsules 510 to 560 corresponding to each of a plurality of functions. According to an embodiment, a single capsule (e.g., a first capsule 510) may correspond to a single function (e.g., geo). Furthermore, at least one service provider (e.g., a first SP 510a and a second SP 510b) for performing the function may correspond to a single capsule. According to an embodiment, a single capsule may include at least one action (e.g., first to third actions 511_1 to 511_5) for performing a specified function and at least one concept (e.g., first to third concepts 513_1 to 513_5).

According to an embodiment, the natural language platform (e.g., the natural language platform 220 of FIG. 4) may generate a plan for performing a task of the received voice input, using the capsule stored in the capsule DB. For example, a planner module (e.g., the planner module 225 of FIG. 4) of the natural language platform may generate a plan, using the capsule stored in the capsule DB.

FIG. 6 illustrates a view of a plan generated by a natural language platform of an intelligent server, according to various embodiments.

Referring to FIG. 6, a natural language platform (e.g., the natural language platform 220 of FIG. 4) may generate a plan corresponding to a voice input, using the capsule stored in a capsule DB (e.g., the capsule DB 230).

According to an embodiment, the natural language platform may determine a third capsule 630 necessary to perform a task, based on the intent of a user. The third capsule 630 may correspond to a third function capable of outputting a result "RESULT". According to an embodiment, the natural language platform may determine a second capsule 620 necessary to perform the third function. The second capsule 620 may correspond to a second function for obtaining a parameter necessary for the third function. According to an embodiment, the natural language platform may determine a first capsule 610 necessary to perform the second function. The first capsule 610 may correspond to a first function for obtaining a parameter necessary for the second function.

According to an embodiment, the natural language platform may select a third action "ACTION 3" 631 for obtaining the result RESULT among a plurality of actions included in the third capsule 630. The third action 631 may output a fifth concept CONCEPT 5 633 including the result. According to an embodiment, the natural language platform may determine a second action ACTION 2 621 for obtaining a fourth concept CONCEPT 4 625 necessary for the third action 631 among a plurality of actions included in the second capsule 620. The second action 621 may sequentially output a third concept CONCEPT 3 623 and the fourth concept 625. According to an embodiment, the natural language platform may determine a first action ACTION 1 613 for obtaining a second concept CONCEPT 2 615 necessary for the second action 621 among a plurality of actions included in the first capsule 610. According to an embodiment, the natural language platform may determine that the first concept CONCEPT 1 611 necessary for the first action 613 is a parameter included in a voice input.

As such, the natural language platform may generate a plan in which the first action 613, the second action 621, and the third action 631 are arranged sequentially based on the input/output relationship of a concept.

According to an embodiment, a user terminal (e.g., the user terminal 100 of FIG. 2) or an intelligent server (e.g., the intelligent server 200 of FIG. 4) may sequentially perform actions based on the generated plan. For example, the user terminal or the intelligent server may perform the first action 613 by using the first concept 611 as a parameter and then may output the second concept 615 as a result value. The user terminal or the intelligent server may perform the second action 621 by using the result value (or the second concept 615) of the first action 613 as a parameter and then may sequentially output the third concept 623 and the fourth concept 624 as a result value. According to an embodiment, the user terminal or the intelligent server may perform the third action 631 by using the result value (or the fourth concept 625) of the second action 621 as a parameter and then may output the fifth concept 633 as a result value. The user terminal may display the result RESULT included in the fifth concept 633, in a display (e.g., the display 140 of FIG. 2).

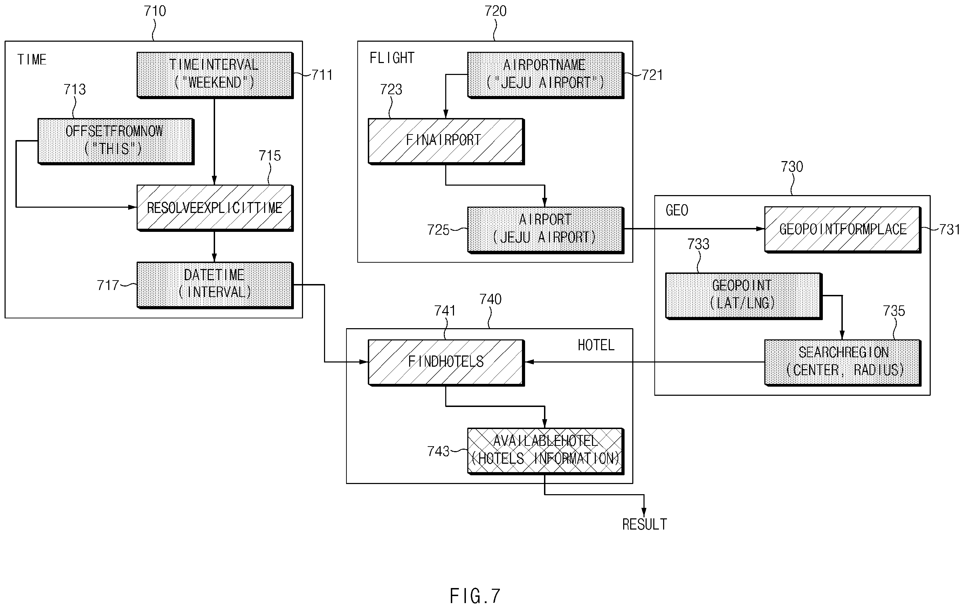

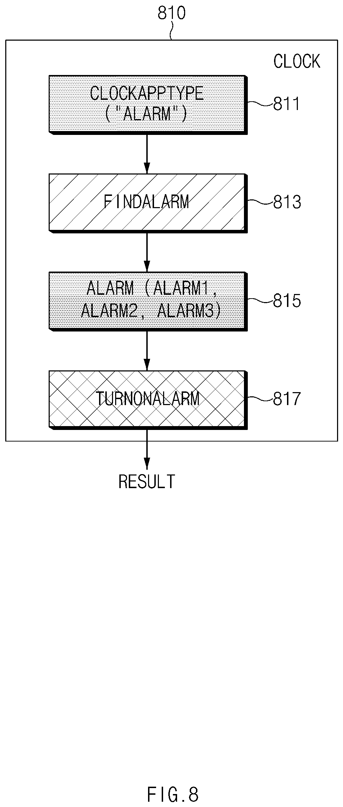

FIGS. 7 and 8 illustrate views of a plan generated by an intelligent server, according to an embodiment.

Referring to FIG. 7, an intelligent server (e.g., the intelligent server 200 of FIG. 4) may receive a voice input saying that "please make a reservation for a hotel around Jeju airport this week" from a user terminal (e.g., the user terminal 100 of FIG. 1).

According to an embodiment, the intelligent server may determine the intent saying that 'finding available hotel' and a parameter including 'this week', 'JEJU airport', and 'around', based on the received user input.

According to an embodiment, the intelligent server may select a HOTEL capsule 740 for providing a function associated with a hotel corresponding to the intent. According to an embodiment, for the purpose of obtaining an AVAILABLEHOTEL concept 743 including available hotel information HOTEL INFORMATION, the intelligent server may select a FINDHOTELS action 741 for finding a hotel under a specified condition among a plurality of actions included in the HOTEL capsule 740.

According to an embodiment, for the purpose of obtaining input information for performing the FINDHOTELS action 741, the intelligent server may select a TIME capsule 710 for providing a function associated with time and a GEO capsule 730 for providing a function associated with geographic information.

According to an embodiment, there may be a need for a SEARCHREGION concept 735 including information (CENTER, RADIUS) about a specified area such that the FINDHOTELS action 741 is performed. Also, for the purpose of obtaining the SEARCHREGION concept 735, there may be a need for a GEOPOINT concept 733 including information LAT/LNG about a geographic point. According to an embodiment, for the purpose of obtaining the GEOPOINT concept 733 and the SEARCHREGION concept 735, the intelligent server may select a GEOPOINTFROMPLACE action 731 for obtaining information about a geographic point among a plurality of actions included in the GEO capsule 730.

According to an embodiment, for the purpose of obtaining input information for performing the GEOPOINTFROMPLACE action 731, the intelligent server may select a FLIGHT capsule 720 for providing a flight-related service. According to an embodiment, there may be a need for an AIRPORT concept 725 including airport location information JEJU AIRPORT such that the GEOPOINTFROMPLACE action 731 is performed. According to an embodiment, for the purpose of obtaining the AIRPORT concept 725, the intelligent server may select a FINDAIRPORT action 723 for obtaining airport location information among a plurality of actions included in the FLIGHT capsule 720. An AIRPORTNAME concept 721 including airport name information "JEJU AIRPORT" required upon performing the FINDAIRPORT action 723 may include "Jeju airport" included in a voice input.

According to an embodiment, there may be a need for a DATETIME concept 717 including information INTERVAL about specified time such that the FINDHOTELS action 741 is performed. According to an embodiment, for the purpose of obtaining the DATETIME concept 717, the intelligent server may select a RESOLVEEXPLICITTIME action 715 for obtaining time information among a plurality of actions included in the TIME capsule 710. A TIMEINTERVAL concept 711 and an OFFSETFROMNOW concept 713 including reference time point information (THIS, WEEKEND) required upon performing the RESOLVEEXPLICITTIME action 715 may include "this", and "week" included in the voice input.

As such, the intelligent server may generate a plan in which the RESOLVEEXPLICITTIME action 715, the FINDAIRPORT action 723, the GEOPOINTFROMPLACE action 731, and the FINDHOTELS action 741 are arranged sequentially, based on the input/output relationship of a concept. The generated plan may include actions capable of being performed by the intelligent server (server end point).

According to an embodiment, when the voice input includes all parameters necessary to perform all actions included in the plan, the intelligent server (e.g., the execution engine 240 of FIG. 4) may perform the action according to the plan to obtain the result and then may transmit the obtained result to the user terminal. For example, the intelligent server may perform the RESOLVEEXPLICITTIME action 715 by using the TIMEINTERVAL concept 711 and the OFFSEFROMNOW concept 713 as parameters and then may output the DATETIME concept 717 as a result value. Furthermore, the intelligent server may perform the FINDAIRPORT action 723 by using the AIRPORTNAME concept 721 as a parameter and then may output the AIRPORT concept 725 as a result value. The intelligent server may execute the GEOPOINTFROMPLACE action 731 by using the AIRPORT concept 725 as a parameter and may sequentially output the GEOPOINT concept 733 and the SEARCHREGION concept 735 as a result value. According to an embodiment, the intelligent server may perform the DATETIME concept 717 by using the DATETIME concept 717 and the SEARCHREGION concept 735 as parameters and may output the AVAILABLEHOTEL concept 743 as a result value. According to an embodiment, the user terminal may display 'available hotel information' included in the AVAILABLEHOTEL concept 743, in a display (e.g., the display 140 of FIG. 2)

As such, when all pieces of information for performing an action is included in the voice input, all actions included in the plan may be performed by the intelligent server and then the result may be provided to a user.

Referring to FIG. 8, an intelligent server (e.g., the intelligent server 200 of FIG. 4) may receive a voice input saying that "please turn on the alarm!" from a user terminal (e.g., the user terminal 100 of FIG. 1).

According to an embodiment, the intelligent server may determine the intent saying that "turning on the alarm" and a parameter of "alarm", based on the received user input.

According to an embodiment, the intelligent server may select a CLOCK capsule 810 for providing a time-related function corresponding to the intent. According to an embodiment, the intelligent server may select a TURNONALARM action 817 among a plurality of actions included in the CLOCK capsule 810 to turn on an alarm. According to an embodiment, information for selecting an alarm for performing the TURNONALARM action 817 may be missing. For example, the information may be information missing from a voice input. According to an embodiment, for the purpose of obtaining an ALARM concept 815 including the canceled alarm information ALARM 1, ALARM 2, and ALARM 3, the intelligent server may determine a FINDALARM action 813 for finding an alarm among a plurality of actions of the CLOCK capsule 810. A CLOCKAPPTYPE concept 811 including the name information "ALARM" of an app required upon performing the FINDALARM action 813 may include an "alarm" included in the voice input.

As such, the intelligent server may generate a plan in which the FINDALARM action 813 and the TURNONALARM action 817 are sequentially arranged based on the input/output relationship of a concept. The generated plan may include an action that needs to be performed in the user terminal (client end point).

According to an embodiment, when the voice input misses a parameter necessary to perform an action included in the plan, a user terminal (e.g., the client module 151 of FIG. 2) may perform an action for obtaining the missing parameter. For example, the user terminal may output the ALARM concept 815 as a result value, by performing the FINDALARM action 813 using the CLOCKAPPTYPE concept 811 as a parameter in an executed alarm app. The user terminal may display the canceled alarm included in the ALARM concept 815, in a display (e.g., the display 140 of FIG. 2). According to an embodiment, the user terminal may be in a standby (or pending) state for performing the TURNONALARM action 817. For example, the user terminal may be in a standby state for receiving a user input to select the alarm necessary to perform the TURNONALARM action 817. According to an embodiment, the user terminal may receive a user input (e.g., a touch input) to select the alarm displayed in the display. According to an embodiment, the user terminal may set the alarm corresponding to the user input by performing the TURNONALARM action 817 by using information (e.g., AM 08:00) corresponding to the user input.

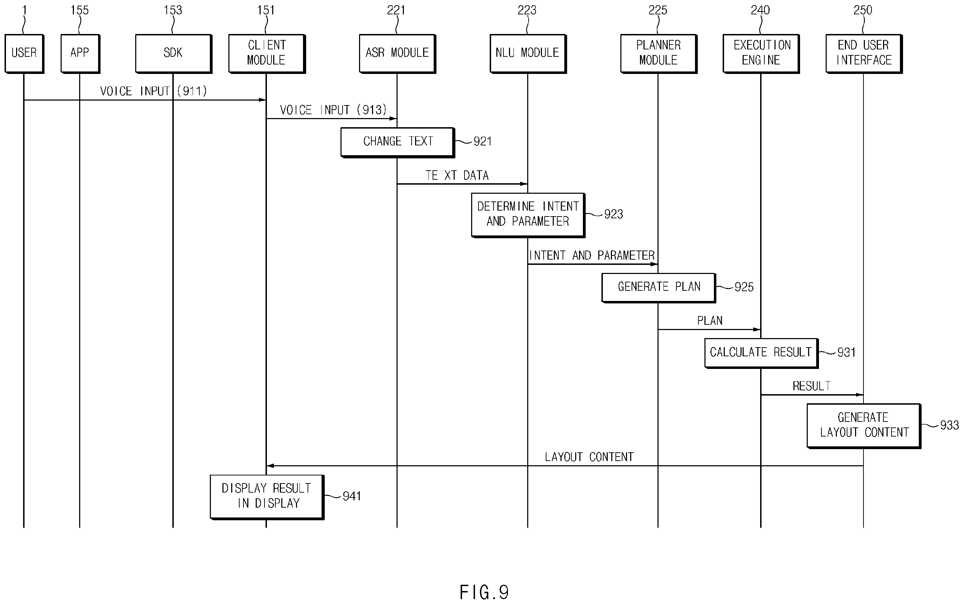

FIG. 9 illustrates a sequence diagram of a procedure of processing a voice input in a user terminal, according to various embodiments.

Referring to FIG. 9, a user terminal (e.g., the user terminal 100 of FIG. 2) may process a voice input received via an intelligent server (e.g., the intelligent server 200 of FIG. 4).

According to an embodiment, in operation 911, the client module 151 of the user terminal may receive a voice input from a user 1. According to an embodiment, in operation 913, the client module 151 of the user terminal may transmit the received voice input to the intelligent server.

According to an embodiment, in operation 921, the ASR module 221 of the intelligent server may change the received voice input into text data. The ASR module 221 may transmit the text data to the NLU module 223. According to an embodiment, in operation 923, the NLU module 223 may determine a user's intent and a parameter necessary to express the intent, using the text data. The NLU module 223 may transmit the determined intent and the parameter to the planner module 225. According to an embodiment, in operation 925, the planner module 225 may generate a plan based on the determined intent and the determined parameter. According to an embodiment, the planner module 225 may transmit the generated plan to the execution engine 240.

According to an embodiment, in operation 931, the execution engine 240 of the intelligent server may perform a plurality of actions based on the transmitted plan to calculate the result. According to an embodiment, in operation 933, the end user interface 250 may generate layout content including the calculated result. The end user interface 250 may transmit the generated layout content to the user terminal.

According to an embodiment, in operation 941, the user terminal may output the received layout content via a display (e.g., the display 140 of FIG. 2). As such, the user terminal may provide the user with information corresponding to the received user input.

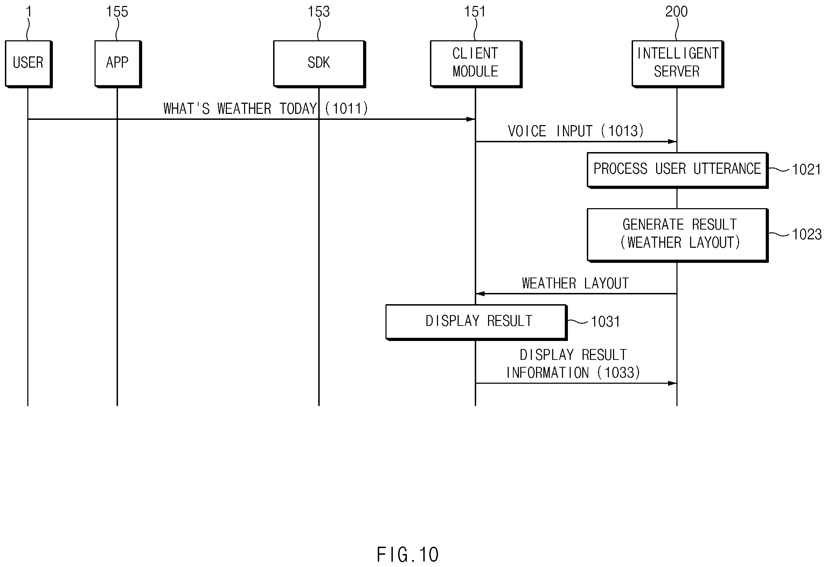

FIG. 10 illustrates a sequence diagram of a procedure of generating a result corresponding to a voice input in an intelligent server, according to an embodiment.

Referring to FIG. 10, the intelligent server 200 may generate a result corresponding to a voice input. The result may include a hypertext markup language (HTML)-based layout.

According to an embodiment, in operation 1011, the client module 151 of a user terminal (e.g., the user terminal 100 of FIG. 2) may receive a user input saying that "What's the weather today?" from a user 1. According to an embodiment, in operation 1013, the client module 151 may transmit the received voice input to the intelligent server 200.

According to an embodiment, in operation 1021, the intelligent server 200 may process the received voice input. For example, the intelligent server 200 may convert voice into text data may determine a user's intent (e.g., weather search) and a parameter (e.g., today) based on the converted text data. The intelligent server 200 may generate a plan based on the determined intent and the determined parameter. According to an embodiment, in operation 1023, the intelligent server 200 may perform a plurality of actions based on the generated plan to calculate 'today's weather information'. The layout including 'today's weather information' may be generated in the intelligent server 200. The intelligent server 200 may transmit the generated weather layout to the user terminal.

According to an embodiment, in operation 1031, the client module 151 of the user terminal may display a weather layout in a display (e.g., the display 140 of FIG. 2). According to an embodiment, in operation 1033, the client module 151 may transmit display result information to the intelligent server 200.

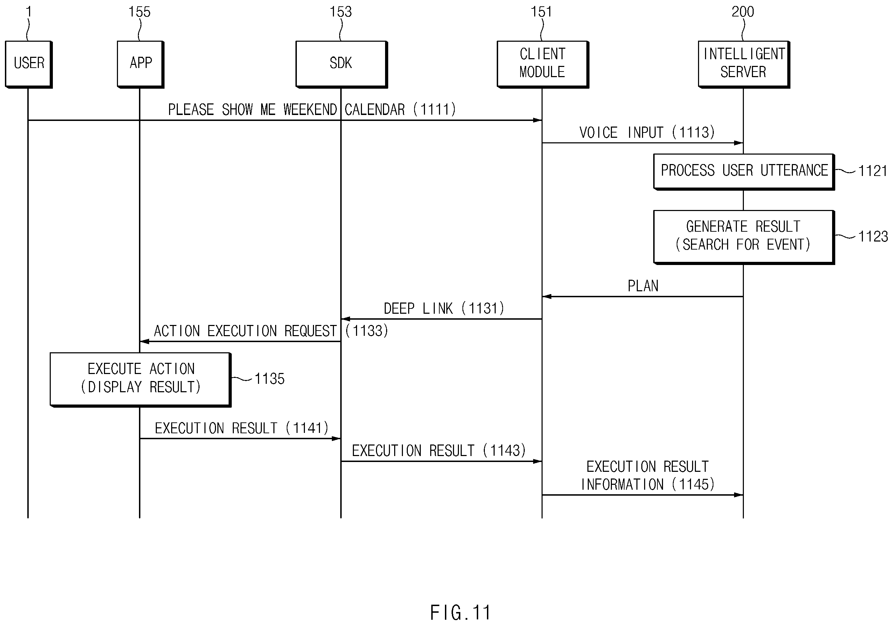

FIG. 11 illustrates a sequence diagram of a procedure of generating a result corresponding to a voice input in a user terminal, according to an embodiment.

Referring to FIG. 11, a user terminal (e.g., the user terminal 100 of FIG. 2) may generate a result corresponding to a voice input.

According to an embodiment, in operation 1111, the client module 151 of a user terminal may receive a voice input saying that "please show me a weekend calendar!", from a user 1. According to an embodiment, in operation 1113, the client module 151 may transmit the received voice input to the intelligent server 200.

According to an embodiment, in operation 1121, the intelligent server 200 may process the received voice input. For example, the intelligent server 200 may convert voice into text data and may determine a user's intent (e.g., event search) and a parameter (e.g., weekend) based on the converted text data. The intelligent server 200 may generate a plan based on the determined intent and the determined parameter. According to an embodiment, in operation 1123, the intelligent server 200 may transmit a deep link including the generated plan to the user terminal.

According to an embodiment, in operation 1131, the client module 151 of a user terminal may transmit the plan including the received deep link to the SDK 153. According to an embodiment, in operation 1133, the SDK 153 may transmit an action execution request to an app (e.g., a calendar app) 155 based on transmitted plan. According to an embodiment, in operation 1135, the result (e.g., 'weekend calendar') of performing an action of the app 155 may be displayed in a display (e.g., the display 140 of FIG. 2) based on the transmitted request. According to an embodiment, in operation 1141, the app 155 may transmit the action execution result to the SDK 153. According to an embodiment, in operation 1143, the SDK 153 may transmit the execution result to the client module 151. According to an embodiment, in operation 1145, the client module 151 may transmit the execution result information to the intelligent server 200.

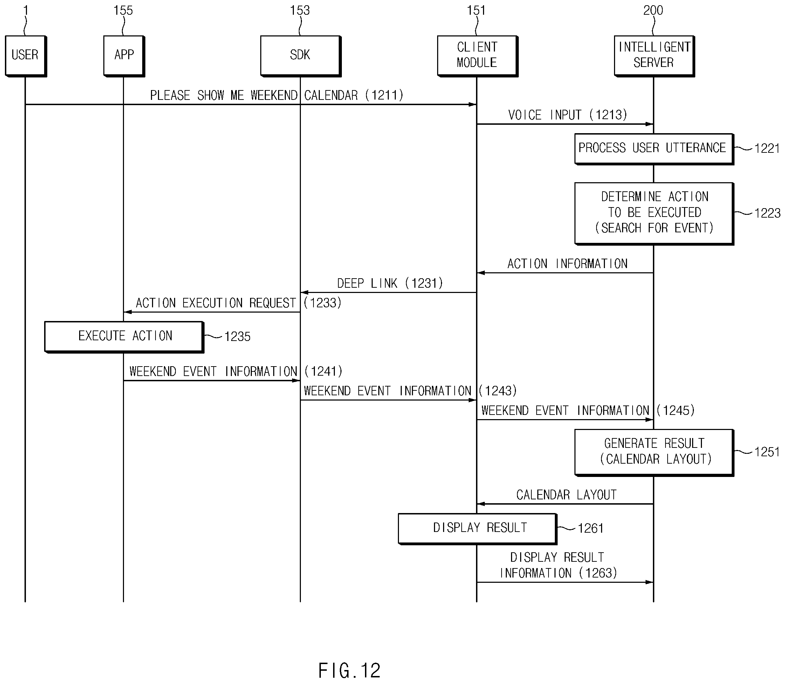

FIG. 12 illustrates a sequence diagram of a procedure of generating a result corresponding to a voice input in a user terminal, according to an embodiment.

Referring to FIG. 12, the intelligent server 200 may generate a result corresponding to a voice input, using information obtained by a user terminal (e.g., the user terminal 100 of FIG. 2).

According to an embodiment, in operation 1211, the client module 151 of a user terminal may receive a voice input saying that "please show me a weekend calendar!", from a user 1. According to an embodiment, in operation 1213, the client module 151 may transmit the received voice input to the intelligent server 200.

According to an embodiment, in operation 1221, the intelligent server 200 may process the received voice input. For example, the intelligent server 200 may convert voice into text data and may determine a user's intent (e.g., event search) and a parameter (e.g., weekend) based on the converted text data. According to an embodiment, in operation 1223, the intelligent server 200 may generate a plan based on the determined intent and the determined parameter. At least part of a plurality of actions included in the plan may be processed by the user terminal. The intelligent server 200 may transmit a deep link including action information corresponding to at least part of the generated plan, to the user terminal.

According to an embodiment, in operation 1231, the client module 151 of a user terminal may transmit action information included in the received deep link, to the SDK 153. According to an embodiment, in operation 1233, the SDK 153 may transmit an action execution request to the app 155 based on transmitted action information. According to an embodiment, in operation 1235, the action of the app 155 may be performed based on the transmitted request to obtain specified information (e.g., 'weekend schedule information'). According to an embodiment, in operation 1241, the app 155 may transmit the obtained information to the SDK 153. According to an embodiment, in operation 1243, the SDK 153 may transmit the obtained information to the client module 151. According to an embodiment, in operation 1245, the client module 151 may transmit the obtained information to the intelligent server 200.

According to an embodiment, in operation 1251, the intelligent server 200 may perform the remaining actions of the plan generated using information received from the user terminal to calculate 'weekend event'. The intelligent server 200 may generate a layout including 'weekend event'. The intelligent server 200 may transmit the generated calendar layout to the user terminal.

According to an embodiment, in operation 1261, the client module 151 of the user terminal may display the calendar layout as the result of the voice input in a display (e.g., the display 140 of FIG. 2). According to an embodiment, in operation 1263, the client module 151 may transmit display result information to the intelligent server 200.

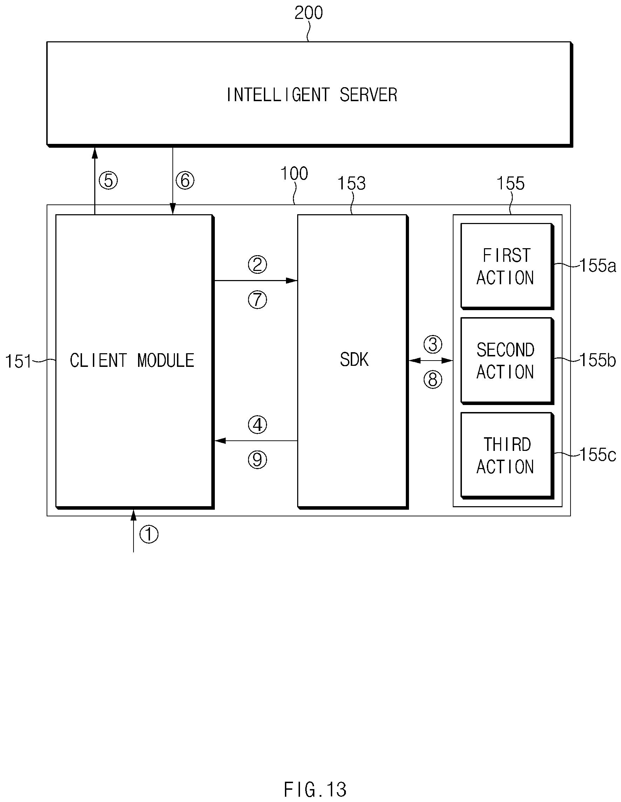

FIG. 13 illustrates a view of a procedure in which a user terminal transmits and processes state information together with a voice input to an intelligent server, according to an embodiment.

For ease of description, major software programs (e.g., application programs) and a database included in the user terminal 100 and the intelligent server 200 will be described in the following embodiments. However, the following embodiments may further include various components (e.g., components included in the user terminal 100 of FIG. 2). According to the illustrated embodiment, the user terminal 100 may include the client module 151, the SDK 153, and the app 155 including a plurality of action modules 155a to 155c.

In an embodiment, the user terminal 100 may sequentially perform the first action 155a, the second action 155b, and the third action 155c of the app 155, using the client module 151 and the SDK 153. Most of all, the user terminal 100 may receive a user input (or a first input) including first data necessary to perform a specified action, via an input device. When the app is a calendar app, the specified action may be, for example, an action for storing a schedule. The first data may include information necessary to store the schedule. For example, the input device may be a touch input via a virtual keyboard. According to an embodiment, the user terminal 100 may store the first data in a volatile memory included in a memory (e.g., the memory 150 of FIG. 2).

According to an embodiment, the client module 151 of the user terminal 100 may receive a voice input (or a second input) (①). For example, the client module 151 may receive the voice input via a microphone (e.g., the microphone 120 of FIG. 2). For example, the voice input may be an input to make a request for performing a task associated with the executed app.

According to an embodiment, when receiving a voice input, the user terminal 100 may transmit a request for receiving the execution state information of the app 155, to the SDK 153 (②). According to an embodiment, the SDK 153 may obtain the state information (or the first data) of the running app 155 (③). For example, the state information may include information obtained by performing an action and information entered in a state of performing the action. According to an embodiment, the SDK 153 may transmit the obtained state information to the client module 151 (④). The client module 151 may store the obtained state information in a nonvolatile memory included in the memory.

According to an embodiment, the client module 151 of the user terminal 100 may transmit the second input to the intelligent server 200 (⑤). For example, the client module 151 may transmit the second input to the intelligent server 200 via a communication circuit (e.g., the communication interface 110 of FIG. 2). According to an embodiment, the client module 151 may transmit at least part of the first data together with the second input to the intelligent server 200.

The client module 151 may store the remaining parts of the first data in a nonvolatile memory included in the memory. According to an embodiment, the user terminal 100 may receive the second data from the intelligent server 200 in response to the second input (⑥). For example, the second data may be a plan including an action for performing a task corresponding to the second input. According to an embodiment, the user terminal 100 may receive at least part of the first data, which has been transmitted to the intelligent server 200, together with the second data.

According to an embodiment, the client module 151 of the user terminal 100 may perform a specified action based on the first data and the second data. The client module 151 may perform the specified action to update the UI displayed in a display. According to an embodiment, the client module 151 may transmit the first data and the second data to the SDK 153 (⑦). For example, the client module 151 may transmit, to the SDK 153, the remaining parts of the first data stored in the memory together with at least part of the first data received from the intelligent server 200. According to an embodiment, the SDK 153 may transmit, to the executed app 155, commands for performing the specified action based on the second data and the first data necessary to perform the specified action (⑧).

According to an embodiment, the SDK 153 of the user terminal 100 may receive result information obtained by performing an action, from the executed app 155. According to an embodiment, the SDK 153 may transmit the result information to the client module 151 (⑨). According to an embodiment, the client module 151 may transmit the result information to the intelligent server 200.

As such, the user terminal 100 may process a voice input by transmitting at least part of the entered data together with the voice input to the intelligent server 200.

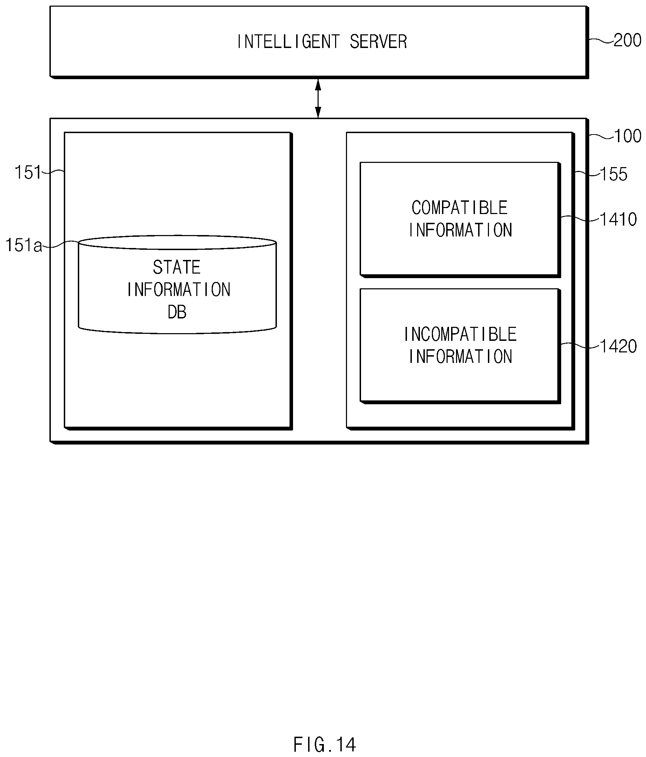

FIG. 14 illustrates a view of a state in which a user terminal executes an app, according to an embodiment.

Referring to FIG. 14, an intelligent assistant system may include the user terminal 100 and the intelligent server 200.

The user terminal 100 may include the client module 151 and the at least one app 155. According to an embodiment, for example, the client module 151 may be a software program capable of being executed by the processor (e.g., the processor 160) of the user terminal 100. For ease of description, major software programs and the database thereof included in the user terminal and the server will be described in the following embodiments. However, it is understood that the following embodiments may include various other components (e.g., components illustrated in FIGS. 2 and 13).

The user terminal 100 may perform the selected or specified action of the at least one app 155, via the client module 151. For the purpose of performing the specified function of the app 155, the user terminal 100 may perform at least one action, using specified information. For example, the specified information may be a parameter necessary to calculate a result value by performing an action. According to an embodiment, the executed app 155 may be in a state where the specified action is being performed or in a state where the execution of the specified action is completed. According to an embodiment, the app 155 may include information (or information necessary for an action) necessary for an action to be performed, after the action, which is being performed or of which the execution is completed, in the executed state.

According to an embodiment, the information necessary for the action may include compatible information 1410 and incompatible information 1420. According to an embodiment, the compatible information may be information capable of being processed by the intelligent server 200; the incompatible information may be information not capable of being processed by the intelligent server 200. For example, the compatible information may be information capable of being processed by defining the information as a parameter in a capsule stored in the capsule DB (e.g., the capsule DB 230 of FIG. 4) of the intelligent server 200; the incompatible information may be information not capable of being processed because the information is not defined as a parameter in the capsule. According to an embodiment, the information defined in the capsule may be information to be necessarily entered to perform the specified action; the information not defined in the capsule may be information to be selectively entered to perform the specified action.

According to an embodiment, the client module 151 may display the result output by the action of the app 155, which is being performed or of which the execution is completed, in a display (e.g., the display 140 of FIG. 2). For example, the result may include a user interface (UI). According to an embodiment, the client module 151 may include content via the UI. For example, the content may include information necessary for the action, which is being performed or of which the execution is completed.

According to an embodiment, the client module 151 may obtain state information of the user terminal 100. For example, the client module 151 may obtain state information of the executed app 155. For example, the state information may include the compatible information 1410 and the incompatible information 1420, which are necessary for the action. According to an embodiment, the client module 151 may include a state information database 151a for storing the state information.

According to an embodiment, when receiving a voice input in a state where the app 155 is executed, the client module 151 may transmit state information of the executed app 155 together with a voice input, to the intelligent server 200. For example, the voice input may be an input for performing an action requiring the state information of the executed app 155.

According to an embodiment, the intelligent server 200 may generate a plan (or action information) for performing the specified action, based on the received voice input and the state information. According to an embodiment, the intelligent server 200 may grasp the intent corresponding to the received voice input and may extract a parameter. The intelligent server 200 may determine a plurality of actions based on the grasped intent and may generate a plan in which an input value and an output value of the determined plurality of actions are defined as a concept. The extracted parameter may be determined as an input value of at least part of a plurality of actions. For example, the plan may stepwise (or hierarchically) include a plurality of actions and a plurality of concepts.

According to an embodiment, the user terminal 100 may receive a result of performing an action based on the plan, from the intelligent server 200. Alternatively, the user terminal 100 may receive a plan from the intelligent server 200 based on the received plan and may perform an action to output the result.

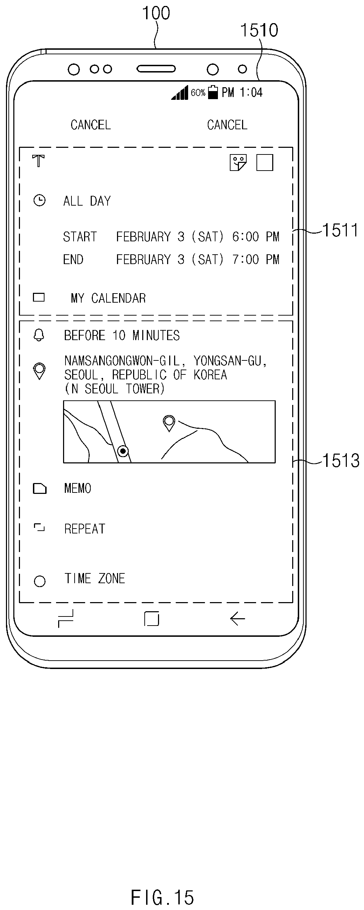

FIG. 15 illustrates a view that a user terminal displays a screen including compatible information and incompatible information in a display, according to an embodiment. According to an embodiment, the user terminal 100 may display a screen for performing a specified action in a display (e.g., the display 140 of FIG. 2).

For example, the user terminal 100 may display a UI 1510 of a calendar app for registering a schedule, in the display. The UI 1510 of the calendar app may include a plurality of items corresponding to pieces of information necessary to register a schedule. For example, the plurality of information items may include title information, date information, place information, and memo information.

According to an embodiment, the user terminal 100 may receive information corresponding to all or part of the plurality of items from the user, using a touch input and/or a voice input. The received information may be displayed in each of the plurality of items of the UI 1510 displayed in the display

In an embodiment, the user terminal 100 may receive various information items for the selected action of the app or a task, but there may be cases where the intelligent server may not process all of the items. In this case, the information items may include the above-mentioned compatible information and the above-mentioned incompatible information. For example, information items for setting the event of a calendar app may include compatible information (e.g., a title, a time, and a place, which are parameters capable of being processed by an intelligent server) and incompatible information (e.g., participants or memos not capable of being processed by the intelligent server).

At this time, in a state where the UI of the app is displayed in the display of the user terminal 100, when a user enters at least part of the incompatible information items as a text via the UI, the terminal may display the entered incompatible information item(s) as a text on the UI. In this state, the user may additionally provide the terminal with the compatible information items using a voice input to make a request for a voice service.

As such, in a state where the user terminal 100 already receives the incompatible information as a text, when the user terminal 100 receives a voice input including the compatible information, the user terminal 100 may transmit state information including both compatible information 1511 and incompatible information 1513, to the intelligent server 200. The intelligent server (e.g., the intelligent server 200 of FIG. 12) may process only the compatible information 1511 included in the received state information and may fail to process the incompatible information 1513.

In other words, information for processing the incompatible information 1513 may not be stored in a capsule DB (e.g., the capsule DB 230 of FIG. 4) of the intelligent server. The capsule DB may store information (e.g., a capsule) for processing a voice input associated with the incompatible information 1513. As such, in a procedure in which the intelligent server 200 processes a voice input, the incompatible information 1513 may be missing. Furthermore, the user terminal 100 may unnecessarily transmit incompatible information not capable of being processed, to the intelligent server 200, thereby wasting finite communication resources (e.g., bandwidth). The user terminal 100 according to various embodiments of the disclosure may transmit and process only the compatible information 1511 among state information 1610 to the intelligent server 200, thereby increasing the efficiency of the processing and the reliability of the result.

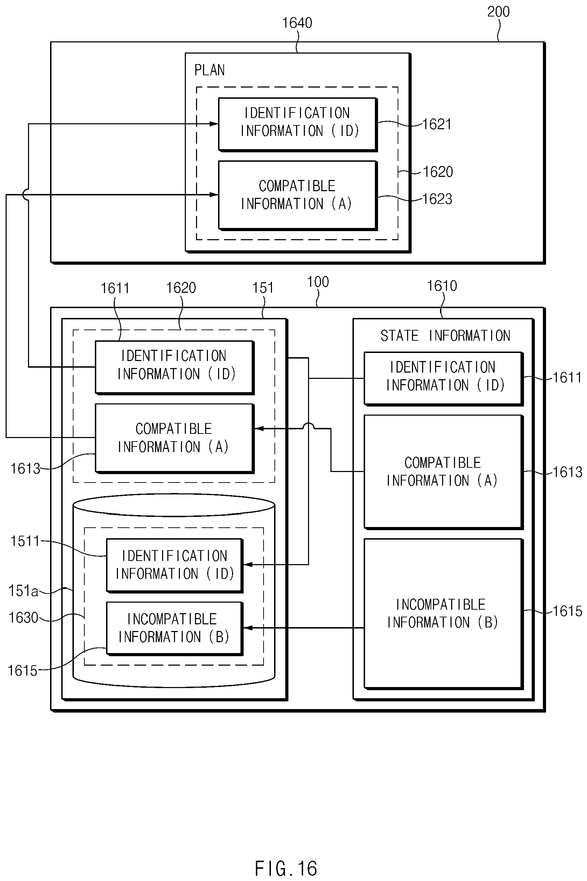

FIG. 16 illustrates a view of a procedure in which a user terminal transmits state information of an executed app to an intelligent server, according to an embodiment. Referring to FIG. 16, the user terminal 100 may generate state information of the running app (e.g., the app 155 of FIG. 14) and then may transmit the generated state information to the intelligent server 200.

According to an embodiment, the client module 151 may receive a voice input (e.g., "please register a schedule!") for performing a task via a microphone (e.g., the microphone 120 of FIG. 2). The voice input may be an input requiring state information (e.g., title information, date information, or the like) of the executed app to perform the task.

According to an embodiment, when receiving the voice input, the client module 151 may generate first state information 1610 of the executed app as follows. For example, the client module 151 may obtain the first state information 1610 of an app in addition to compatible information A 1613 and incompatible information B 1615 of the executed app, to which identification information ID 1611 are assigned. According to an embodiment, the first state information 1610 may include the identification information ID 1611, the compatible information A 1613, and the incompatible information B 1615. For example, the first state information 1610 of a calendar app may include the identification information ID 1611, the compatible information A 1613 (e.g., time information and place information), and the incompatible information B 1615 (e.g., participant, memo information).

In this case, only capsule information (or app information) for processing the compatible information A 1613 may be stored in the database (e.g., the capsule DB 230 of FIG. 4) of the intelligent server 200. In other words, the intelligent server 200 may process the compatible information A 1613 (e.g., date information) for performing a specified action (e.g., schedule registration), but may not process the incompatible information B 1615 (e.g., location information).

According to an embodiment, the client module 151 may obtain the first state information 1610 via an SDK (e.g., the SDK 153 of FIG. 2). For example, the client module 151 may transmit a request for receiving the first state information 1610 to the SDK and may receive the first state information 1610 as the response to the request from the SDK.

According to an embodiment, the client module 151 may be divided into the first state information 1610, second state information 1620, and third state information 1630. For example, the client module 151 may match the compatible information A 1613 and the incompatible information 1615, which are included in the first state information 1610, with the identification information ID 1611 and then may divide the compatible information A 1613 and the incompatible information 1615 into the second state information 1620 and the third state information 1630, respectively.

According to an embodiment, the client module 151 may transmit the second state information 1620 to the intelligent server 200 together with the received voice input. In other words, the client module 151 may transmit the received voice input and the compatible information A 1613 (e.g., date information) matched with the identification information ID 1611, to the intelligent server 200. For example, the compatible information A 1613 may be information capable of being processed using a capsule corresponding to a calendar app. According to an embodiment, the client module 151 may transmit the voice input and the second state information 1620 via a communication interface (e.g., the communication interface 110 of FIG. 2).

According to an embodiment, the client module 151 may store the third state information 1630 in the state information database 151a. In other words, the client module 151 may store the incompatible information B 1615 (e.g., location information) matched with the identification information ID 1611 in the state information database 151a. For example, the incompatible information B 1615 may be information not capable of being processed by the intelligent server 200.

According to an embodiment, the intelligent server 200 may receive the voice input and the second state information 1620 from the user terminal 100. For example, the intelligent server 200 may receive the voice input and the second state information 1620 via a front end (e.g., the front end 210 of FIG. 2) (or a communication interface).

According to an embodiment, the intelligent server 200 may generate a plan 1640 for performing a task based on the voice input and the second state information 1620. According to an embodiment, the intelligent server 200 may convert a voice input into text data and may determine intent based on the text data. For example, the intelligent server 200 may determine that 'schedule registration' is the intent corresponding to the voice input. According to an embodiment, the intelligent server 200 may generate the plan 1640 in which at least one action and at least one concept are arranged stepwise, based on the determined intent. The concept may be determined as compatible information A 1623 included in the second state information 1620. For example, the intelligent server 200 may generate the plan 1640 in which 'schedule registration action', and 'date information' are arranged stepwise. According to an embodiment, the second state information 1620 may be matched with identification information ID 1621.

According to an embodiment, the intelligent server 200 may generate the plan 1640 for performing a task, using a capsule DB (e.g., the capsule DB 230 of FIG. 4). According to an embodiment, the intelligent server 200 may generate the plan 1640 for performing the task via an artificial neural network.

According to an embodiment, the generated plan 1640 may not include a parameter to be necessarily entered into the action. For example, the generated plan 1640 may not include 'title information' necessary for 'schedule registration'.

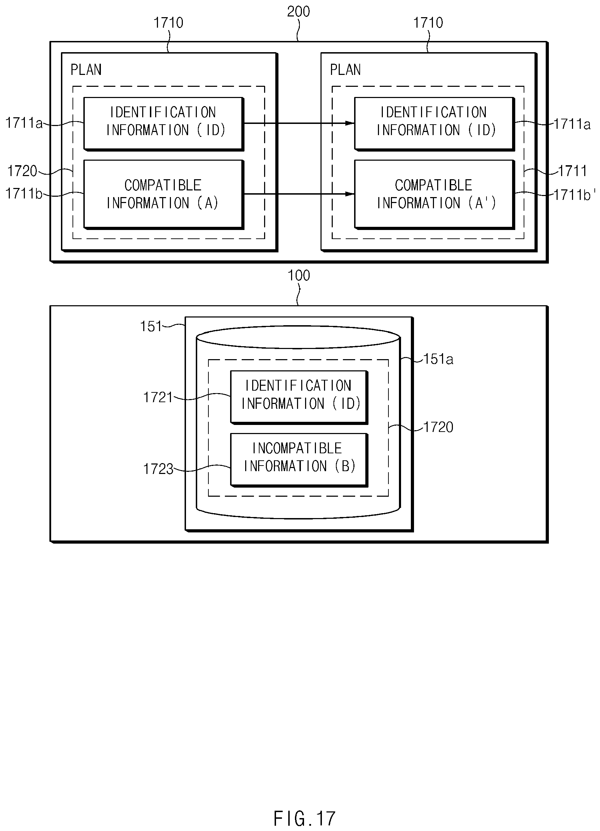

FIG. 17 illustrates a view of a procedure in which an intelligent server receives missing information to form a plan corresponding to a voice input, according to an embodiment.

Referring to FIG. 17, the intelligent server 200 may obtain information to be necessarily entered to perform a plurality of actions included in the generated plan.

According to an embodiment, the intelligent server 200 may determine that input information necessary for an action included in a generated plan 1710 is missing. For example, when generating (e.g., arranging an action and a concept stepwise) the plan 1710, the intelligent server 200 may determine that 'title information' necessary to perform 'schedule registration' is missing. For another example, when performing an action included in the plan 1710 to obtain a result, the intelligent server 200 may determine that 'title information' necessary to perform 'schedule registration' is missing.

According to an embodiment, when input information necessary for an action included in the generated plan 1710 is missing, the intelligent server 200 may transmit feedback information for obtaining the missing information, to the user terminal 100. For example, the intelligent server 200 may transmit the feedback information for obtaining 'title information' to the user terminal 100.

According to an embodiment, the user terminal 100 may receive the feedback information and then may provide the received feedback information to a user. For example, the user terminal 100 may output the feedback information via a speaker (e.g., the speaker 130 of FIG. 2) or a display (e.g., the display 140 of FIG. 2). According to an embodiment, the user terminal 100 may output guide information saying that "please enter a schedule title!" via the speaker. Furthermore, the user terminal 100 may output UI capable of receiving 'schedule title', via a display.

According to an embodiment, the user terminal 100 may receive a user input including missing information. For example, the user input may be a voice input via a microphone (e.g., the microphone 120 of FIG. 2) or a touch input via a touch screen display (e.g., the display 140 of FIG. 2). According to an embodiment, the user terminal 100 may transmit the received user input to the intelligent server 200. According to an embodiment, the user terminal 100 may transmit the received user input to the intelligent server 200 via a communication interface (e.g., the communication interface 110 of FIG. 2).

According to an embodiment, the intelligent server 200 may add missing information included in the user input, to the generated plan 1710. For example, the intelligent server 200 may add 'title information' to the generated plan 1710. As such, compatible information A 1711b included in second state information 1711 may be changed to compatible information A' 1711b' to which 'title information' is added.

According to an embodiment, the client module 151 of the user terminal 100 may store third state information 1720 in a state information database 151a. The third state information 1720 may include incompatible information B 1723 matched with identification information ID 1721. The identification information ID 1721 of the third state information 1720 may be the same as identification information ID 1711a of the second state information 1711.

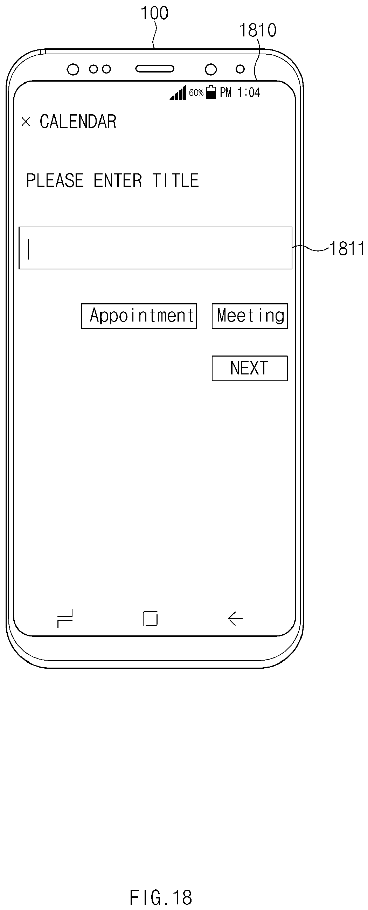

FIG. 18 illustrates a view that a user terminal outputs missing information via a display, according to an embodiment.

Referring to FIG. 18, the user terminal 100 may display a UI 1810 for receiving missing information in a display (e.g., the display 140 of FIG. 2).

According to an embodiment, the user terminal 100 may receive a user input for obtaining missing information via the UI 1810 displayed in the display. For example, the user terminal 100 may display the UI 1810 including an input field 1811 for receiving 'title information', in the display. A user may enter 'title information' into the input field 1811 via a keyboard input (e.g., virtual keyboard input).

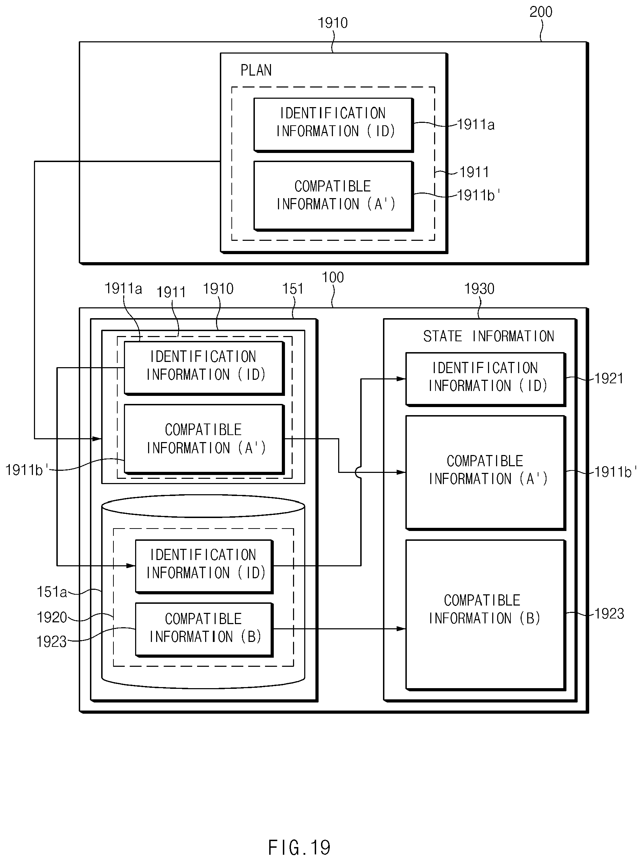

FIG. 19 illustrates a view that an intelligent server transmits a plan in which missing information is included, to a user terminal, according to an embodiment.

Referring to FIG. 19, the user terminal 100 may perform an action included in a plan received from the intelligent server 200, using incompatible information 1923.

According to an embodiment, the client module 151 may receive a plan 1910 from the intelligent server 200. For example, the plan 1910 may include second state information 1911. The second state information 1911 may include identification information 1911a and compatible information A' 1911b' matched with the identification information 1911a.

According to an embodiment, the client module 151 may obtain incompatible information B 1923 corresponding to the compatible information A' 1911b' included in the plan 1910. For example, the client module 151 may obtain the incompatible information B 1923 from third state information 1920 including the identification information ID 1921 the same as the identification information ID 1911a included in the plan 1910 among pieces of state information stored in a state information database 151a. For example, the client module 151 may obtain 'place information' from the third state information 1920.

According to an embodiment, the client module 151 may generate (again generate) first state information 1930, using the compatible information A' 1911b', which are included in the received plan 1910 and the obtained incompatible information B 1923. The compatible information A' 1911b' and the obtained incompatible information B 1923 may be matched with the identification information ID of the third state information 1920. For example, the client module 151 may generate the first state information 1930 including 'title information', 'date information', and 'place information', which are necessary for 'schedule registration'. According to an embodiment, the first state information 1930 may include information necessary to perform an action included in the plan 1910.

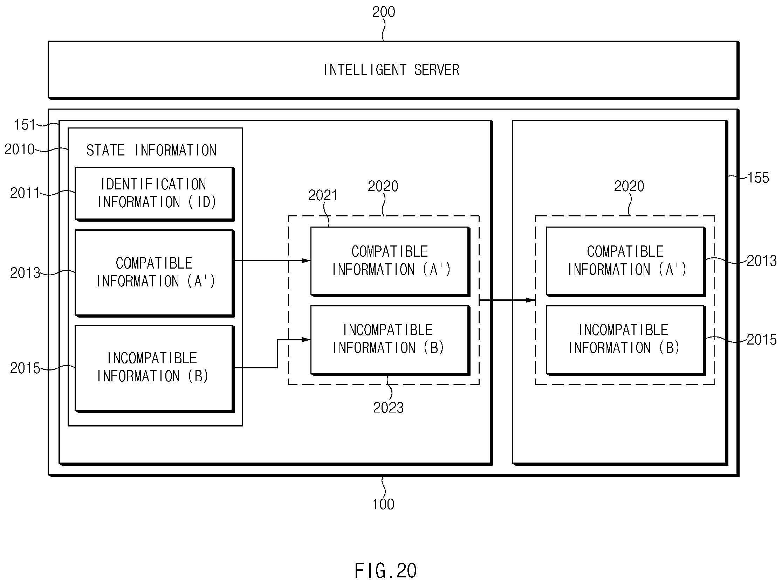

FIG. 20 illustrates a view of a procedure in which a user terminal performs an action based on a plan to which incompatible information is added, according to an embodiment.

Referring to FIG. 20, the client module 151 of the user terminal 100 may transmit input information 2020 extracted from the generated first state information 2010, to the executed app 155 together with the execution request of the action according to the received plan. The first state information 2010 may be matched with identification information ID 2011.

According to an embodiment, the client module 151 may generate the input information 2020 necessary to perform an action according to the received plan, using the generated first state information 2010. For example, the input information 2020 may include compatible information 2013 (e.g., title information and date information) of the first state information 2010 and incompatible information 2015 (e.g., place information). According to an embodiment, the client module 151 may transmit the input information 2020 to the app 155 together with an action execution request. For example, the client module 151 may transmit 'title information', 'date information', and 'place information' to a calendar app together with a request for 'schedule registration'.

According to an embodiment, the client module 151 may generate the input information 2020 via an SDK (e.g., the SDK 153 of FIG. 2) and may transmit the generated input information 2020 together with an action execution request to the app 155.

According to an embodiment, the app 155 may perform an action using the input information 2020 based on the request. For example, the app 155 may perform an action using compatible information A' 2021, and incompatible information B 2023, which are included in the input information 2020. For example, the calendar app may perform schedule registration using 'title information', 'date information', and 'place information'. As such, the user terminal 100 may provide a user with the execution result of the action.

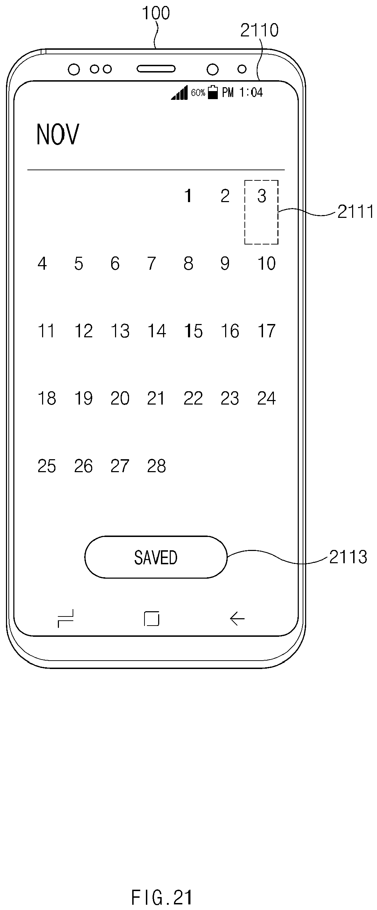

FIG. 21 illustrates a view that a screen, in which a user terminal performs an action based on a plan, is displayed in a display according to an embodiment.

Referring to FIG. 21, the user terminal 100 may provide a user with a result of performing an action corresponding to a voice input.

According to an embodiment, the user terminal 100 may display a UI 2110 of the executed app in a display and may provide the user with the result of performing an action via the UI 2110. For example, the user terminal 100 may display the UI 2110 including a calendar for displaying the registered schedule, in a display, may display a stored schedule 2111 in the calendar, and may display action completion information 2113 in the UI 2110.

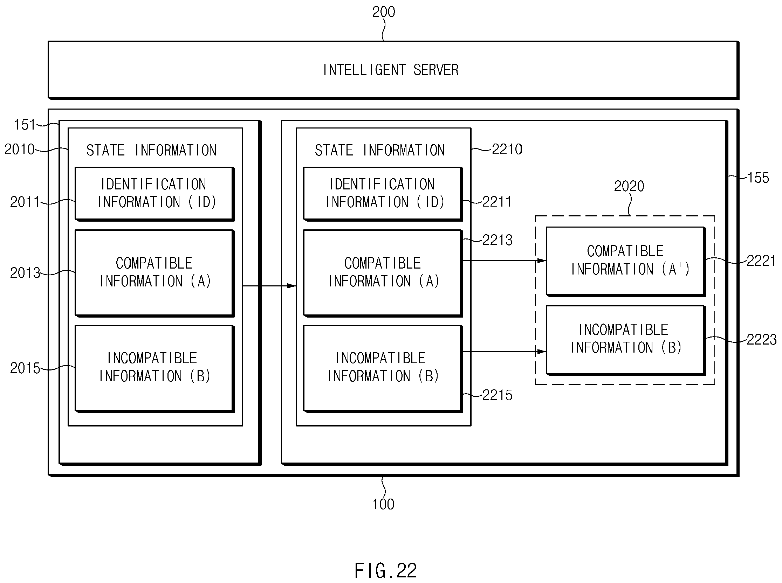

FIG. 22 illustrates a view of a procedure in which a user terminal performs an action based on a plan to which incompatible information is added, according to another embodiment.

Referring to FIG. 22, the client module 151 of the user terminal 100 may transmit generated first state information 2210 to the app 155, together with the received plan. The first state information 2210 may be matched with identification information ID 2211.

According to an embodiment, an SDK (e.g., the SDK 153 of FIG. 2) may be included in each of the plurality of apps 155. As such, the client module 151 may transmit the generated first state information 2210 to the app 155, together with the received plan.

According to an embodiment, the SDK included in the app 155 may generate input information 2220 necessary to perform an action according to the received plan, using the transmitted first state information 2210. For example, the input information 2220 may include compatible information A' 2213 and incompatible information B 2215 of the first state information 2210. According to an embodiment, the SDK may perform an action according to the plan, using the generated input information 2220. As such, the user terminal 100 may provide a user with the execution result of the action.

According to various embodiments of the disclosure described with reference to FIGS. 13 to 22, it may be possible to transmit only the compatible information compatible with another device among information necessary for an action included in the execution state of the app 155 to an intelligent server, thereby increasing efficiency and reliability when a voice input to be processed together with state information is processed.

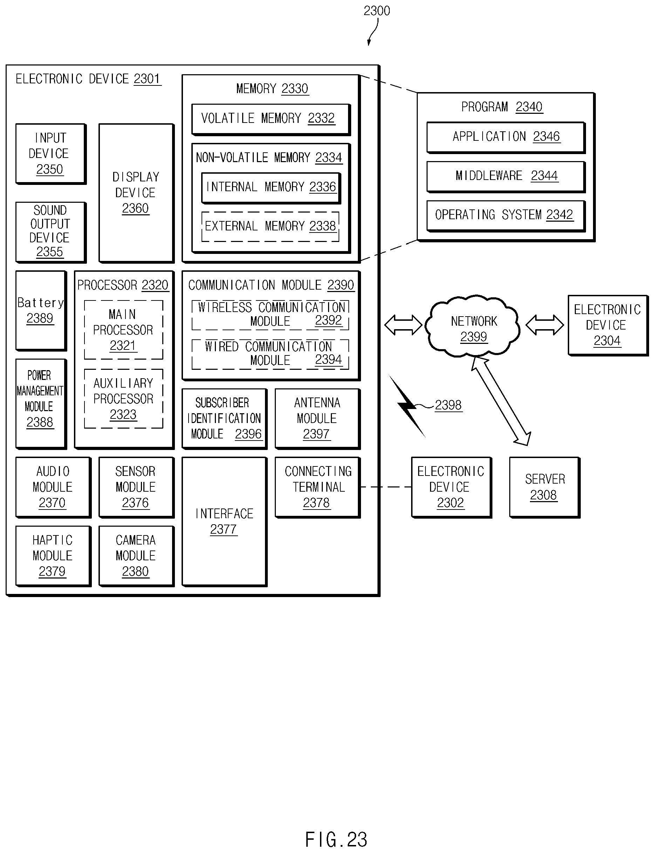

FIG. 23 illustrates a block diagram of an electronic device in a network environment according to various embodiments.

Referring to FIG. 23, an electronic device 2301 may communicate with an electronic device 2302 through a first network 2398 (e.g., a short-range wireless communication) or may communicate with an electronic device 2304 or a server 2308 through a second network 2399 (e.g., a long-distance wireless communication) in a network environment 2300. According to an embodiment, the electronic device 2301 may communicate with the electronic device 2304 through the server 2308. According to an embodiment, the electronic device 2301 may include a processor 2320, a memory 2330, an input device 2350, a sound output device 2355, a display device 2360, an audio module 2370, a sensor module 2376, an interface 2377, a haptic module 2379, a camera module 2380, a power management module 2388, a battery 2389, a communication module 2390, a subscriber identification module 2396, and an antenna module 2397. According to some embodiments, at least one (e.g., the display device 2360 or the camera module 2380) among components of the electronic device 2301 may be omitted or other components may be added to the electronic device 2301. According to some embodiments, some components may be integrated and implemented as in the case of the sensor module 2376 (e.g., a fingerprint sensor, an iris sensor, or an illuminance sensor) embedded in the display device 2360 (e.g., a display).

The processor 2320 may operate, for example, software (e.g., a program 2340) to control at least one of other components (e.g., a hardware or software component) of the electronic device 2301 connected to the processor 2320 and may process and compute a variety of data. The processor 2320 may load a command set or data, which is received from other components (e.g., the sensor module 2376 or the communication module 2390), into a volatile memory 2332, may process the loaded command or data, and may store result data into a nonvolatile memory 2334. According to an embodiment, the processor 2320 may include a main processor 2321 (e.g., a central processing unit or an application processor) and an auxiliary processor 2323 (e.g., a graphic processing device, an image signal processor, a sensor hub processor, or a communication processor), which operates independently from the main processor 2321, additionally or alternatively uses less power than the main processor 2321, or is specified to a designated function. In this case, the auxiliary processor 2323 may operate separately from the main processor 2321 or embedded.

In this case, the auxiliary processor 2323 may control, for example, at least some of functions or states associated with at least one component (e.g., the display device 2360, the sensor module 2376, or the communication module 2390) among the components of the electronic device 2301 instead of the main processor 2321 while the main processor 2321 is in an inactive (e.g., sleep) state or together with the main processor 2321 while the main processor 2321 is in an active (e.g., an application execution) state. According to an embodiment, the auxiliary processor 2323 (e.g., the image signal processor or the communication processor) may be implemented as a part of another component (e.g., the camera module 2380 or the communication module 2390) that is functionally related to the auxiliary processor 2323. The memory 2330 may store a variety of data used by at least one component (e.g., the processor 2320 or the sensor module 2376) of the electronic device 2301, for example, software (e.g., the program 2340) and input data or output data with respect to commands associated with the software. The memory 2330 may include the volatile memory 2332 or the nonvolatile memory 2334.

The program 2340 may be stored in the memory 2330 as software and may include, for example, an operating system 2342, a middleware 2344, or an application 2346.

The input device 2350 may be a device for receiving a command or data, which is used for a component (e.g., the processor 2320) of the electronic device 2301, from an outside (e.g., a user) of the electronic device 2301 and may include, for example, a microphone, a mouse, or a keyboard.

The sound output device 2355 may be a device for outputting a sound signal to the outside of the electronic device 2301 and may include, for example, a speaker used for general purposes, such as multimedia play or recordings play, and a receiver used only for receiving calls. According to an embodiment, the receiver and the speaker may be either integrally or separately implemented.

The display device 2360 may be a device for visually presenting information to the user of the electronic device 2301 and may include, for example, a display, a hologram device, or a projector and a control circuit for controlling a corresponding device. According to an embodiment, the display device 2360 may include a touch circuitry or a pressure sensor for measuring an intensity of pressure on the touch.

The audio module 2370 may convert a sound and an electrical signal in dual directions. According to an embodiment, the audio module 2370 may obtain the sound through the input device 2350 or may output the sound through an external electronic device (e.g., the electronic device 2302 (e.g., a speaker or a headphone)) wired or wirelessly connected to the sound output device 2355 or the electronic device 2301.

The sensor module 2376 may generate an electrical signal or a data value corresponding to an operating state (e.g., power or temperature) inside or an environmental state outside the electronic device 2301. The sensor module 2376 may include, for example, a gesture sensor, a gyro sensor, a barometric pressure sensor, a magnetic sensor, an acceleration sensor, a grip sensor, a proximity sensor, a color sensor, an infrared sensor, a biometric sensor, a temperature sensor, a humidity sensor, or an illuminance sensor.

The interface 2377 may support a designated protocol wired or wirelessly connected to the external electronic device (e.g., the electronic device 2302). According to an embodiment, the interface 2377 may include, for example, an HDMI (high-definition multimedia interface), a USB (universal serial bus) interface, an SD card interface, or an audio interface.

A connecting terminal 2378 may include a connector that physically connects the electronic device 2301 to the external electronic device (e.g., the electronic device 2302), for example, an HDMI connector, a USB connector, an SD card connector, or an audio connector (e.g., a headphone connector).

The haptic module 2379 may convert an electrical signal to a mechanical stimulation (e.g., vibration or movement) or an electrical stimulation perceived by the user through tactile or kinesthetic sensations. The haptic module 2379 may include, for example, a motor, a piezoelectric element, or an electric stimulator.

The camera module 2380 may shoot a still image or a video image. According to an embodiment, the camera module 2380 may include, for example, at least one lens, an image sensor, an image signal processor, or a flash.

The power management module 2388 may be a module for managing power supplied to the electronic device 2301 and may serve as at least a part of a power management integrated circuit (PMIC).

The battery 2389 may be a device for supplying power to at least one component of the electronic device 2301 and may include, for example, a non-rechargeable (primary) battery, a rechargeable (secondary) battery, or a fuel cell.

The communication module 2390 may establish a wired or wireless communication channel between the electronic device 2301 and the external electronic device (e.g., the electronic device 2302, the electronic device 2304, or the server 2308) and support communication execution through the established communication channel. The communication module 2390 may include at least one communication processor operating independently from the processor 2320 (e.g., the application processor) and supporting the wired communication or the wireless communication. According to an embodiment, the communication module 2390 may include a wireless communication module 2392 (e.g., a cellular communication module, a short-range wireless communication module, or a GNSS (global navigation satellite system) communication module) or a wired communication module 2394 (e.g., an LAN (local area network) communication module or a power line communication module) and may communicate with the external electronic device using a corresponding communication module among them through the first network 2398 (e.g., the short-range communication network such as a Bluetooth, a Wi-Fi direct, or an IrDA (infrared data association)) or the second network 2399 (e.g., the long-distance wireless communication network such as a cellular network, an internet, or a computer network (e.g., LAN or WAN)). The above-mentioned various communication modules 2390 may be implemented into one chip or into separate chips, respectively.

According to an embodiment, the wireless communication module 2392 may identify and authenticate the electronic device 2301 using user information stored in the subscriber identification module 2396 in the communication network.

The antenna module 2397 may include one or more antennas to transmit or receive the signal or power to or from an external source. According to an embodiment, the communication module 2390 (e.g., the wireless communication module 2392) may transmit or receive the signal to or from the external electronic device through the antenna suitable for the communication method.

Some components among the components may be connected to each other through a communication method (e.g., a bus, a GPIO (general purpose input/output), an SPI (serial peripheral interface), or an MIPI (mobile industry processor interface)) used between peripheral devices to exchange signals (e.g., a command or data) with each other.

According to an embodiment, the command or data may be transmitted or received between the electronic device 2301 and the external electronic device 2304 through the server 2308 connected to the second network 2399. Each of the electronic devices 2302 and 2304 may be the same or different types as or from the electronic device 2301. According to an embodiment, all or some of the operations performed by the electronic device 2301 may be performed by another electronic device or a plurality of external electronic devices. When the electronic device 2301 performs some functions or services automatically or by request, the electronic device 2301 may request the external electronic device to perform at least some of the functions related to the functions or services, in addition to or instead of performing the functions or services by itself. The external electronic device receiving the request may carry out the requested function or the additional function and transmit the result to the electronic device 2301. The electronic device 2301 may provide the requested functions or services based on the received result as is or after additionally processing the received result. To this end, for example, a cloud computing, distributed computing, or client-server computing technology may be used.

The electronic device according to various embodiments disclosed in the disclosure may be various types of devices. The electronic device may include, for example, at least one of a portable communication device (e.g., a smartphone), a computer device, a portable multimedia device, a mobile medical appliance, a camera, a wearable device, or a home appliance. The electronic device according to an embodiment of the disclosure should not be limited to the above-mentioned devices.

It should be understood that various embodiments of the disclosure and terms used in the embodiments do not intend to limit technologies disclosed in the disclosure to the particular forms disclosed herein; rather, the disclosure should be construed to cover various modifications, equivalents, and/or alternatives of embodiments of the disclosure. With regard to description of drawings, similar components may be assigned with similar reference numerals. As used herein, singular forms may include plural forms as well unless the context clearly indicates otherwise. In the disclosure disclosed herein, the expressions "A or B", "at least one of A or/and B", "A, B, or C" or "one or more of A, B, or/and C", and the like used herein may include any and all combinations of one or more of the associated listed items. The expressions "a first", "a second", "the first", or "the second", used in herein, may refer to various components regardless of the order and/or the importance, but do not limit the corresponding components. The above expressions are used merely for the purpose of distinguishing a component from the other components. It should be understood that when a component (e.g., a first component) is referred to as being (operatively or communicatively) "connected," or "coupled," to another component (e.g., a second component), it may be directly connected or coupled directly to the other component or any other component (e.g., a third component) may be interposed between them.

The term "module" used herein may represent, for example, a unit including one or more combinations of hardware, software and firmware. The term "module" may be interchangeably used with the terms "logic", "logical block", "part" and "circuit". The "module" may be a minimum unit of an integrated part or may be a part thereof. The "module" may be a minimum unit for performing one or more functions or a part thereof. For example, the "module" may include an application-specific integrated circuit (ASIC).

Various embodiments of the disclosure may be implemented by software (e.g., the program 2340) including an instruction stored in a machine-readable storage media (e.g., an internal memory 2336 or an external memory 2338) readable by a machine (e.g., a computer). The machine may be a device that calls the instruction from the machine-readable storage media and operates depending on the called instruction and may include the electronic device (e.g., the electronic device 2301). When the instruction is executed by the processor (e.g., the processor 2320), the processor may perform a function corresponding to the instruction directly or using other components under the control of the processor. The instruction may include a code generated or executed by a compiler or an interpreter. The machine-readable storage media may be provided in the form of non-transitory storage media. Here, the term "non-transitory", as used herein, is a limitation of the medium itself (i.e., tangible, not a signal) as opposed to a limitation on data storage persistency.

According to an embodiment, the method according to various embodiments disclosed in the disclosure may be provided as a part of a computer program product. The computer program product may be traded between a seller and a buyer as a product. The computer program product may be distributed in the form of machine-readable storage medium (e.g., a compact disc read only memory (CD-ROM)) or may be distributed only through an application store (e.g., a Play Store™). In the case of online distribution, at least a portion of the computer program product may be temporarily stored or generated in a storage medium such as a memory of a manufacturer's server, an application store's server, or a relay server.

Each component (e.g., the module or the program) according to various embodiments may include at least one of the above components, and a portion of the above sub-components may be omitted, or additional other sub-components may be further included. Alternatively or additionally, some components (e.g., the module or the program) may be integrated in one component and may perform the same or similar functions performed by each corresponding components prior to the integration. Operations performed by a module, a programming, or other components according to various embodiments of the disclosure may be executed sequentially, in parallel, repeatedly, or in a heuristic method. Also, at least some operations may be executed in different sequences, omitted, or other operations may be added.

A user terminal according to various embodiments of the disclosure may transmit only the compatible information compatible with another device among information necessary for an action included in the execution state of an app to an intelligent server, thereby increasing efficiency and reliability when a voice input to be processed together with state information is processed.

Besides, a variety of effects directly or indirectly understood through this disclosure may be provided.

While the disclosure has been shown and described with reference to various embodiments thereof, it will be understood by those skilled in the art that various changes in form and details may be made therein without departing from the spirit and scope of the disclosure as defined by the appended claims and their equivalents.

Although the present disclosure has been described with various embodiments, various changes and modifications may be suggested to one skilled in the art. It is intended that the present disclosure encompass such changes and modifications as fall within the scope of the appended claims.

## Claims

1. An electronic apparatus comprising:
a communication interface;
a memory;
a microphone;
a speaker;
a touch screen display; and
at least one processor,
wherein the memory stores instructions that, when executed by the at least one processor, cause the at least one processor to:
in response to receiving a voice input for performing a task via the microphone, obtain state information of an executing application, wherein the obtained state information includes:
compatible information capable of being processed by another apparatus different from the electronic apparatus,
incompatible information not capable of being processed by the another apparatus, and
identification information (ID),
wherein the compatible information and the incompatible information are pieces of information necessary to perform the task;
transmit the voice input and the identification information matched with the compatible information, to an external server via the communication interface;
store the incompatible information matched with the identification information in the memory;
receive action information, which is generated based on the voice input and the compatible information, and the compatible information from the external server via the communication interface;
obtain the incompatible information stored in the memory, using the identification information matched with the compatible information;
perform the task based on the action information; and
in response to performing the task, use the obtained incompatible information.

2. The electronic apparatus of claim 1, wherein the instructions, when executed by the at least one processor, further cause the at least one processor to:
transmit a request for receiving the state information to a software develop kit (SDK); and
receive the state information as a response to the request, from the SDK.

3. The electronic apparatus of claim 1, wherein the instructions, when executed by the at least one processor, further cause the at least one processor to:
transmit response information and the obtained incompatible information to a SDK of the executed application; and
perform the task, via the SDK, based on the action information by using the compatible information and the incompatible information.

4. The electronic apparatus of claim 1, wherein:
the compatible information is information capable of being processed using information about the application included in the external server, and
the incompatible information is information not capable of being processed using the information about the application included in the external server.

5. The electronic apparatus of claim 1, wherein:
the compatible information is information to be necessarily entered to perform the task, and
the incompatible information is information to be selectively entered to perform the task.

6. The electronic apparatus of claim 5, wherein the instructions, when executed by the at least one processor, further cause the at least one processor to:
in response to at least one of the information to be entered necessarily is missing in the compatible information, receive feedback information for receiving the missing information from a user, from the external server;
output the feedback information via at least one of the speaker or the touch screen display;
receive a user input including the missing information, via at least one of the microphone or the touch screen display;
transmit the user input to the external server via the communication interface; and
receive the action information generated based on the voice input, the compatible information, and the user input, via the communication interface.

7. The electronic apparatus of claim 6, wherein the user input is a voice input via the microphone or a touch input via the touch screen display.

8. A server for processing a user utterance, the server comprising:
a communication interface;
a memory including a database storing information of a plurality of applications executed by an external electronic apparatus;
at least one processor;
wherein the memory stores instructions that, when executed by the at least one processor, cause the at least one processor to:
receive a voice input for performing a task and compatible information included in state information of an application executed by the external electronic apparatus, from the external electronic apparatus via the communication interface, wherein the compatible information is matched with identification information (ID), and wherein the state information includes the compatible information and incompatible information;
generate action information for performing the task based on the voice input and the compatible information; and
transmit the generated action information and the compatible information matched with the identification information, to the external electronic apparatus via the communication interface.

9. The server of claim 8, wherein the instructions, when executed by the at least one processor, further cause the at least one processor to:
obtain function information stored in the memory to select a function of the application corresponding to the voice input; and
generate the action information for performing the task, based on the obtained function information.

10. The server of claim 8, wherein the instructions, when executed by the at least one processor, cause the at least one processor to:
determine the action information for performing the task via an artificial neural network.

11. The server of claim 8, wherein:
the compatible information is information capable of being processed using information about the application included in an external server, and
the incompatible information is information not capable of being processed using the information about the application included in the external server.

12. The server of claim 8, wherein:
the compatible information is information to be necessarily entered to perform the task, and
the incompatible information is information to be selectively entered to perform the task.

13. The server of claim 12, wherein the instructions, when executed by the at least one processor, further cause the at least one processor to:
in response to at least one of the information to be entered necessarily is missing in the compatible information, generate feedback information for receiving the missing information from a user;
transmit the feedback information to the external electronic apparatus via the communication interface;
receive a user input including the missing information from the external electronic apparatus via the communication interface; and
generate the action information based on the voice input, the compatible information, and the user input.

14. The server of claim 13, wherein the user input is a voice input via a microphone or a touch input via a touch screen display.

15. A system for processing a user utterance, the system comprising:
an electronic apparatus including:
a first communication interface;
a first memory;
a microphone;
a speaker;
a touch screen display; and
a first processor, and
a server including:
a second communication interface;
a second memory including a database storing information of a plurality of applications executed by the electronic apparatus; and
a second processor,
wherein the first memory stores first instructions that, when executed by the first processor, cause the first processor to:
in response to receiving a voice input for performing a task via the microphone, obtain state information of an executing application, wherein the obtained state information includes:
compatible information capable of being processed by another apparatus different from the electronic apparatus,
incompatible information not capable of being processed by the another apparatus, and
identification information (ID),
wherein the compatible information and the incompatible information are pieces of information necessary to perform the task;
transmit the user utterance and the identification information matched with the compatible information, to the server via the first communication interface; and
store the incompatible information matched with the identification information in the first memory;
wherein the second memory stores second instructions that, when executed by the second processor, cause the second processor to:
receive the voice input and the compatible information matched with the identification information from the another apparatus via the second communication interface;
generate action information for performing the task based on the voice input and the compatible information; and
transmit the generated action information and the compatible information matched with the identification information, to the another apparatus via the second communication interface, and
wherein the first instructions, when executed by the first processor, cause the first processor to:
receive the action information from the server via the first communication interface;
obtain the incompatible information stored in the first memory, using the identification information matched with the compatible information;
perform the task based on the action information; and
in response to performing the task, use the obtained incompatible information.
